# EUROPÄISCHE PATENTSCHRIFT

(11) **EP 2 475 698 B1**
(45) Veröffentlichungstag und Bekanntmachung des Hinweises auf die Patenterteilung: **28.01.2015**
(21) Anmeldenummer: 10744512.4
(22) Anmeldetag: 03.08.2010
(51) Int. Cl.: C08G 18/16, C08G 18/18, C08G 18/28, C08G 18/42, C08G 18/71, C08G 18/77, C08G 18/80, C09D 175/04

(54) **BINDEMITTELMISCHUNG UND SIE ENTHALTENDE BESCHICHTUNGSMITTEL SOWIE DARAUS HERGESTELLTE BESCHICHTUNGEN MIT HOHER KRATZBESTÄNDIGKEIT UND WITTERUNGSSTABILITÄT SOWIE GUTEN OPTISCHEN EIGENSCHAFTEN**
BINDING AGENT MIXTURE, COATING AGENTS CONTAINING SAID BINDING AGENT MIXTURE, AND COATINGS PRODUCED FROM SAID COATING AGENTS, SAID COATINGS HAVING A HIGH SCRATCH RESISTANCE, HIGH WEATHERING STABILITY, AND GOOD OPTICAL PROPERTIES
MÉLANGE À BASE DE LIANT ET AGENT DE REVÊTEMENT AINSI QUE REVÊTEMENTS OBTENUS À PARTIR DE CE DERNIER, PRÉSENTANT UNE RÉSISTANCE ÉLEVÉE À LA RAYURE, UNE GRANDE STABILITÉ AUX INTEMPÉRIES ET DE BONNES PROPRIÉTÉS OPTIQUES

(30) Priorität: 12.09.2009 DE 102009041380
(43) Veröffentlichungstag der Anmeldung: 18.07.2012
(73) Patentinhaber: BASF Coatings GmbH, 48165 Münster (DE)
(72) Erfinder: KLEIN, Günter, 48165 Münster (DE); POPPE, Andreas, Qin Pu District (CN); HOLTSCHULTE, Sabine, 59387 Ascheberg (DE); FELDMANN, Björn, 48165 Münster (DE); WENKING, Ulrike, 48565 Steinfurt (DE); JOOST, Karl-Heinz, 63761 Großostheim (DE)
(86) Internationale Anmeldenummer: PCT/EP2010/004747
(87) Internationale Veröffentlichungsnummer: WO 2011/029502

(56) Entgegenhaltungen:
- WO-A1-2008/074489
- WO-A1-2010/063332
- DE-A1-102007 026 722
- DE-A1-102007 061 855

## Beschreibung

Gegenstand der vorliegenden Erfindung sind Bindemittelmischungen enthaltend mindestens eine hydroxylgruppenhaltige Verbindung (A) und mindestens 1,0 Gew.-%, bezogen auf die nicht flüchtigen Bestandteile der Mischung, mindestens eines phosphor- und stickstoff-haltigen Katalysators (D) für die Vernetzung von Silangruppen.

Außerdem betrifft die Erfindung Beschichtungsmittel auf Basis der Bindemittelmischung sowie mehrstufige Beschichtungsverfahren unter Verwendung dieser Beschichtungsmittel sowie die Verwendung der Beschichtungsmittel als Klarlack bzw. Anwendung des Beschichtungsverfahrens für die Automobilserienlackierung und die Automobilreparaturlackierung.

Die EP-A-1 273 640 beschreibt Beschichtungsmittel enthaltend eine Polyol-Komponente und eine Vernetzerkomponente, bestehend aus aliphatischen und/oder cycloaliphatischen Polyisocyanaten, wobei 0,1 bis 95 mol-% der ursprünglich freien vorhandenen Isocyanatgruppen mit Bisalkoxysilylamin umgesetzt sind. Als Katalysator enthalten diese Beschichtungsmittel übliche Katalysatoren, wie organische Zinnverbindungen, beispielsweise Dibutylzinndilaurat, Amine oder Sulphonsäure-basierende Katalysatoren, beispielsweise p-Toluolsulphonsäure. Die in der EP-A-1 273 640 beschriebenen Beschichtungsmittel können für die OEM-Serienlackierung eingesetzt werden und weisen eine gute Kratzbeständigkeit bei gleichzeitig guter Beständigkeit gegen Umwelteinflüsse auf. Jedoch neigen diese Beschichtungsmittel besonders stark zur Nachvernetzung, da der Umsatz beim thermischen Aushärten nach der Applikation ungenügend ist. Dies wirkt sich besonders auf die Witterungsstabilität negativ aus.

Aus der WO2008/074489 sind Beschichtungsmittel bekannt, die mindestens eine hydroxylgruppenhaltige Verbindung (A) und mindestens eine isocyanatgruppenhaltige Verbindung (B) enthalten, wobei ein oder mehrere Bestandteile des Beschichtungsmittels hydrolysierbare Silangruppen aufweisen. Es ist erfindungswesentlich, dass die dort beschriebenen Beschichtungsmittel als Katalysator (D) für die Vernetzung der Silangruppen phosphorhaltige Katalysatoren, insbesondere aminblockierte Phosphorsäureethylhexylteilester, enthalten. Als Beispiele für Amine, mit welchem die Phosphorsäureester blockiert werden, sind tertiäre Amine, bevorzugt Triethylamin, genannt. Die dort beschriebenen Beschichtungsmittel führen zu Beschichtungen mit einer hohen Kratzbeständigkeit bei einer gleichzeitig guten Witterungsstabilität. Die Beschichtungsmittel sollen jedoch hinsichtlich der optischen Eigenschaften, insbesondere hinsichtlich des Appearance, noch weiter verbessert werden. Außerdem weisen diese Beschichtungsmittel einen nur unzureichenden elektrischen Widerstand auf.

Insbesondere, wenn die Beschichtungsmaterialien im Rahmen der Applikation elektrostatisch aufgeladen werden, ist der elektrische Widerstand der Beschichtungsmaterialien von besonderer Bedeutung. Je nach Anlage kann es aus sicherheitstechnischen Gründen erforderlich sein, dass die Beschichtungsmaterialien, im Falle von 2K-Beschichtungsmitteln auch die einzelnen Lackkomponenten, einen gewissen elektrischen Widerstandswert nicht unterschreiten dürfen. Vor diesem Hintergrund ist es von Interesse, Beschichtungsmaterialien bereit zu stellen, die einen gewissen Mindestwert hinsichtlich des elektrischen Widerstandes nicht unterschreiten. Im Bereich der Automobilserienlackierung wird daher üblicherweise gefordert, dass die Beschichtungsmittel bzw. im Falle von 2K-Beschichtungsmitteln auch die einzelnen Lackkomponenten einen elektrischen Widerstand von mindestens 200 kOhm, vorzugsweise mindestens 250 kOhm und besonders bevorzugt mindestens 350 kOhm aufweisen. Die jeweils geforderten Grenzwerte sind anlagenspezifische Grenzwerte und können je nach den spezifischen Vorgaben der Anlagenhersteller variieren. Die jeweils höchsten Grenzwerte sind deshalb besonders bevorzugt, weil sie die Vorgaben von verschiedenen Anlagen erfüllen.

Der elektrische Widerstand wird mit Hilfe einer Eintauchmesszelle mit einem Leitfähigkeitsmessgerät der Fa. Byk Gardner vom Typ LC 2 gemäß DIN 55667 bei 25°C untersucht.

Das Dokument DE10 2007 061 855 A1 betrifft Beschichtungsmittel auf Basis aprotischer Lösemittel enthaltend Polyole und Polyisocyanate mit hydrolysierbaren Silangruppen, die zu Beschichtungen mit einer hohen Kratzfestigkeit bei gleichzeitig hohem Glanz und hoher Witterungsstabilität führen. Die Tabelle im Absatz [0109] offenbart Zusammensetzungen, die ein Polyacrylatpolyol, ein teilsilanisiertes Polyisocyanat und einen phosphorhaltigen Katalysator für die Vernetzung der Silangruppen enthalten. Der phosphorhaltige Katalysator ist mit DBN blockiert.

Schließlich sind in der noch nicht veröffentlichten deutschen Patentanmeldung DE 102008 060454.2-43 Beschichtungsmittel enthaltend mindestens einen hyperverzweigten, dendritischen hydroxyfunktionellen Polyester (A) mit einer OH-Zahl ≥ 180 mg KOH/g gemessen über DIN 53240, sowie Polyisocyanate (B), die zumindest teilweise hydrolysierbare Silangruppen enthalten, beschrieben. Als Katalysator (D) für die Vernetzung der Silangruppen werden phosphorhaltige Katalysatoren, insbesondere aminblockierte Phosphorsäureethylhexylteilester, verwendet. Als Beispiele für Amine, mit welchem die Phosphorsäureester blockiert werden, sind tertiäre Amine, beispielsweise Dimethyldodecylamin oder Triethylamin sowie bicyclische Amine, wie z. B. Diazabicyclononen (DBN), Diazabicyclootan (DABCO), Diazabicycloundecen (DBU), genannt. Angaben, wie der elektrische Widerstand der Bindemittelmischungen und der Beschichtungsmittel eingestellt werden kann, sind in dieser Schrift jedoch nicht enthalten. Auch ist die Verwendung von Aminen, die mindestens einen verzeigten aliphatischen Kohlenwasserstoffrest enthalten, zur Blockierung der Phosphorsäureester nicht beschrieben.

### Aufgabe

Der vorliegenden Erfindung lag daher die Aufgabe zugrunde, Bindemittelmischungen und daraus hergestellte Beschichtungsmittel, insbesondere für die Klarlackschicht bei OEM-Serienlackierungen und bei Automobilreparaturlackierungen, zur Verfügung zu stellen, die zu Beschichtungen mit einer hohen Kratzbeständigkeit bei einer gleichzeitig guten Säureresistenz und einer guten Witterungsstabilität sowie gleichzeitig einem sehr guten optischen Gesamteindruck (sogenanntem sehr gutem Appearance) führen.

Es sollten daher Beschichtungsmittel zur Verfügung gestellt werden, die zu einem hochgradig witterungsstabilen Netzwerk führen und die gleichzeitig eine hohe Säurefestigkeit gewährleisten. Daneben sollen die Beschichtungsmittel zu Beschichtungen führen, welche schon direkt nach der thermischen Härtung hochgradig kratzfest sind und insbesondere einen hohen Glanzerhalt nach Kratzbelastung aufweisen. Weiterhin sollten sich die Beschichtungen und Lackierungen, speziell die Klarlackierungen, auch in Schichtdicken > 40 µm herstellen lassen, ohne dass Spannungsrisse auftreten. Dies ist eine wesentliche Voraussetzung für die Verwendung der Beschichtungen und Lackierungen, insbesondere der Klarlackierungen, in dem technologisch und ästhetisch besonders anspruchsvollen Gebiet der Automobilserienlackierung (OEM).

Gleichzeitig sollten die Bindemittelmischungen und die daraus hergestellten Beschichtungsmittel einen gewissen Mindestwert hinsichtlich des elektrischen Widerstandes nicht unterschreiten. Im Bereich der Automobilserienlackierung wird üblicherweise gefordert, dass der elektrische Widerstand sowohl der einzelnen Lackkomponenten, wie der Bindemittelmischung, als auch der daraus hergestellten Beschichtungsmittel mindestens 200 kOhm, vorzugsweise mindestens 250 kOhm und besonders bevorzugt mindestens 350 kOhm beträgt.

Schließlich sollten die Beschichtungsmittel aber auch eine gute Transparenz (niedrige Haze-Werte) und einen guten Verlauf zeigen sowie zu Beschichtungen mit einem guten optischen Gesamteindruck führen.

### Lösung der Aufgabe

Im Lichte der obengenannten Aufgabenstellung wurden Bindemittelmischungen auf Basis aprotischer Lösemittel gefunden, enthaltend
mindestens eine hydroxylgruppenhaltige Verbindung (A) und
mindestens 1,0 Gew.-%, bezogen auf die nicht flüchtigen Bestandteile der Mischung, mindestens eines phosphor- und stickstoff-haltigen Katalysators (D) für die Vernetzung von Silangruppen,
dadurch gekennzeichnet, dass die Mischung
(i) als hydroxylgruppenhaltige Verbindung (A) mindestens einen hydroxyfunktionellen Polyester enthält, bei dem im Mittel mindestens eine Hydroxylfunktion des Polyesters mit mindestens einer Säure ausgewählt aus der Gruppe der isomeren C8- bis C9-Monocarbonsäuren verestert ist, und
(ii) als Katalysator (D) mindestens einen phosphorhaltigen Katalysator enthält, der mit mindestens einem Amin der Formel (I) 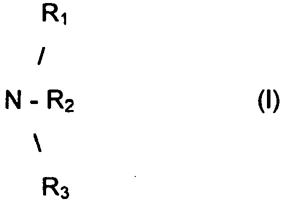 blockiert ist, wobei
   R₁ ein acyclischer aliphatischer oder araliphatischer Kohlenwasserstoffrest mit mindestens 3 C-Atomen,
   R₂ ein gleicher oder von R₁ und/oder R₃ verschiedener acyclischer aliphatischer oder araliphatischer Kohlenwasserstoffrest und
   R₃ Wasserstoff oder ein gleicher oder von R₁ und/oder R₂ verschiedener acyclischer aliphatischer oder araliphatischer Kohlenwasserstoffrest ist.

Außerdem betrifft die Erfindung Beschichtungsmittel auf Basis der Bindemittelmischung sowie mehrstufige Beschichtungsverfahren unter Verwendung dieser Beschichtungsmittel sowie die Verwendung der Beschichtungsmittel als Klarlack bzw. Anwendung des Beschichtungsverfahrens für die Automobilserienlackierung und die Automobilreparaturlackierung sowie für die Beschichtung von Automobil-Anbauteilen.

Im Hinblick auf den Stand der Technik war es überraschend und für den Fachmann nicht vorhersehbar, dass die Aufgaben, die der vorliegenden Erfindung zugrunde lagen, mit Hilfe der erfindungsgemäßen Bindemittelmischung bzw. mit Hilfe des erfindungsgemäßen Beschichtungsmittels auf Basis dieser Bindemittelmischung gelöst werden konnten.

So ist es insbesondere überraschend, dass die erfindungsgemäßen Bindemittelmischungen und die entsprechenden erfindungsgemäßen Beschichtungsmittel trotz des relativ hohen Anteils an Katalysator (D) einen elektrischen Widerstand von mindestens 200 kOhm, vorzugsweise mindestens 250 kOhm und besonders bevorzugt mindestens 350 kOhm aufweisen, wie im Bereich der Automobilserienlackierung (OEM) gefordert.

Gleichzeitig liefern die erfindungsgemäßen Beschichtungsmittel neue Beschichtungen und Lackierungen, speziell Klarlackierungen, die hoch kratzfest sind und im Gegensatz zu gängigen hochvernetzten kratzfesten Systemen säureresistent sind. Weiterhin lassen sich die erfindungsgemäßen Beschichtungen und Lackierungen, speziell die Klarlackierungen, auch in Schichtdicken > 40 µm herstellen, ohne dass Spannungsrisse auftreten. Deswegen können die erfindungsgemäßen Beschichtungen und Lackierungen, insbesondere die Klarlackierungen, in dem technologisch und ästhetisch besonders anspruchsvollen Gebiet der Automobilserienlackierung (OEM) eingesetzt werden. Dabei zeichnen sie sich durch eine besonders hohe Waschstraßenbeständigkeit und Kratzfestigkeit aus. Insbesondere ist die hohe Kratzfestigkeit der Beschichtungen direkt nach der Endhärtung der Beschichtungen gegeben, so dass die Beschichtungen direkt im Anschluss an die Endhärtung problemlos gehandhabt werden können.

Ferner ist es überraschend, dass die Bindemittelmischungen und die Beschichtungsmittel gleichzeitig auch eine gute Transparenz (niedrige Haze-Werte) und einen guten Verlauf zeigen sowie zu Beschichtungen mit einem guten optischen Gesamteindruck führen. Schließlich können die erfindungsgemäßen Komponenten besonders einfach und sehr gut reproduzierbar hergestellt werden und bereiten bei der Lackapplikation keine signifikanten toxikologischen und ökologischen Probleme.

### Beschreibung der Erfindung

### Die erfindungsgemäße Bindemittelmischung

### Die hydroxyfunktionellen Polyester (A)

Es ist erfindungswesentlich, dass die erfindungsgemäßen Bindemittelmischungen mindestens einen hydroxyfunktionellen Polyester enthalten, wobei im Mittel mindestens eine Hydroxylfunktion des hydroxyfunktionellen Polyesters mit mindestens einer Säure ausgewählt aus der Gruppe der isomeren C8-C9-Monocarbonsäuren verestert ist. Insbesondere kann so ein zufrieden stellender Restglanz der resultierenden Beschichtungen erreicht werden. Die vorgenannt beschriebene Veresterung mit mindestens einer C8-C9-Carbonsäure wird auch synonym als "Säuremodifikation" bezeichnet.

Vorzugsweise ist der Rest der isomeren C8-C9-Monocarbonsäure gesättigt. Derartige Klarlackzusammensetzungen weisen eine gute Witterungsstabilität auf.

Besonders vorteilhafte Eigenschaften im Sinne der Erfindung resultieren, wenn der Rest der C8-C9-Monocarbonsäure der Rest von Octansäure oder Isononansäure ist. Besonders bevorzugt wird als C8-C9-Monocarbonsäure Isononansäure eingesetzt.

Bevorzugt werden für die Veresterung mit den isomeren C8-C9-Monocarbonsäuren hyperverzweigte, dendritische hydroxyfunktionelle Polyester eingesetzt. Hyperverzweigte, dendritische Verbindungen, d.h. hyperverzweigte, dendritische Makromoleküle und Dendrimere, können allgemein als dreidimensionale, hochverzweigte Moleküle mit einer baumartigen Struktur beschrieben werden. Dendrimere sind hochsymmetrisch, während ähnliche Makromoleküle, die als hyperverzweigt und/oder dendritisch bezeichnet werden, in einem bestimmten Maß asymmetrisch sein können und dennoch die hochverzweigte baumartige Struktur beibehalten. Hyperverzweigte und dendritische Makromoleküle können üblicherweise ausgehend von einem Initiator oder Nukleus mit einer oder mehreren reaktiven Stellen und einer Zahl von Verzweigungsschichten ("Generationen") und gegebenenfalls einer Schicht von kettenbeendigenden Molekülen hergestellt werden (divergenter Syntheseansatz). Die fortgesetzte Replikation von Verzweigungsschichten ergibt normalerweise eine erhöhte Verzweigungsmultiplizität und gegebenenfalls oder gewünschtenfalls eine erhöhte Zahl von Endgruppen, Die Schichten werden üblicherweise Generationen und die Zweige Dendrone genannt.

Der erfindungsgemäß eingesetzte, mit einer isomeren C8-C9-Monocarbonsäure modifizierte Polyester (A) weist bevorzugt eine Hydroxylzahl von ≥ 150 mg KOH/g, insbesondere eine Hydroxylzahl von > 180 mg KOH/g, bevorzugt 185 - 240 mg KOH/g, bestimmt gemäß DIN 53240 auf. Insbesondere werden Polyester eingesetzt, die eine Hydroxyfunktionalität (gegeben über die Anzahl der freien und der veresterten Hydroxylgruppen des hydroxyfunktionellen Polyesters) von größer als 16 aufweisen. Derartige Klarlackzusammensetzungen verfügen über eine ausreichende Mikrohärte (d.h. > 90 N/mm2, bestimmt gemäß DIN EN ISO 14577 mit Hilfe des Fischerscope Messgerätes der Firma Fischer mit einer maximalen Kraft von 25,6 mN), sind kratzfest und chemikalienbeständig.

Ebenfalls bevorzugt sind hydroxyfunktionelle Polyester (A), die eine Säurezahl ≤ 8,0, bevorzugt 0 - 6,0 bestimmt gemäß DIN 53402 aufweisen. Solche Säurezahlen der Polyester führen zu einer besseren Verträglichkeit dieser Polyester mit anderen Lackrohstoffen und zu einem verbesserten Verlauf.

Weiterhin bevorzugt sind hydroxyfunktionelle Polyester (A) mit einem zahlenmittleren Molekulargewicht von 1500 - 4000 g/mol, bevorzugt 2000-3500 g/mol bestimmt über GPC mit einem Polystyrolstandard in THF mit 0,1 mol/l Essigsäure. Ein solches niedriges Molekulargewicht kombiniert mit einer entsprechend engen Molekulargewichtsverteilung des dendritischen Polyesters führt allgemein zu einer besseren Verträglichkeit.

Vorzugsweise werden Polyester mit einer Polydispersität Mw/Mn < 4 eingesetzt. Besonders gute Eigenschaften resultieren dabei, wenn der Polyester eine noch kleinere Polydispersität aufweist, d.h. Mw/Mn < 2,5, insbesondere Mw/Mn ≤ 2,0.

Besonders bevorzugt werden monodisperse oder im wesentlichen monodisperse Polyester eingesetzt, die sich einfach, verlässlich und reproduzierbar herstellen lassen und deren Eigenschaften und Endstrukturen leicht und komfortabel angepasst werden können.

Derartige Polyester können hergestellt werden über eine partielle Veresterung eines hydroxyfunktionellen Polyesters, der wiederum herstellbar ist über ein Verfahren zur Synthese eines dendritischen polymeren Polyalkohols (Polyesterpolyol) mit reaktiven und gegebenenfalls geschützten Hydroxylendgruppen gemäß EP 991 690 B1,
- wobei der polymere Polyalkohol n dendritische Zweige besitzt, die von einem monomeren oder polymeren Initiatormolekül mit n reaktiven Gruppen (A1) entspringen, wobei jeder Zweig g Verzweigungsgenerationen umfasst, wobei jede Generation mindestens einen polymeren oder monomeren Verzweigungskettenverlängerer mit drei funktionellen Gruppen, von denen mindestens zwei reaktive Hydroxylgruppen (A2) sind und eine eine Carboxylgruppe (A3) ist, die mit der reaktiven Gruppe (A1) und/oder den Hydroxylgruppen (A2) reaktiv ist, umfasst, und gegebenenfalls mindestens eine Abstandhaltergeneration, die mindestens einen Abstandhalterkettenverlängerer mit zwei funktionellen Gruppen, von denen eine geschützte Hydroxylgruppe (A2") und eine eine Gruppe (A4) ist, die mit einer Hydroxylgruppe reaktiv ist, umfasst, wobei n und g ganze Zahlen und mindestens 1 sind,
- wobei (i) die zwei Hydroxylgruppen (A2) des verwendeten monomeren oder polymeren Kettenverzweigungsverlängerers acetalgeschützte Hydroxylgruppen (A2') sind, wobei der Schutz durch Acetal erhalten wird durch eine Reaktion zwischen den zwei Hydroxylgruppen (A2) und einer acetalbildenden Carbonylverbindung; und
- (ii) eine erste Verzweigungsgeneration zum Initiatormolekül hinzugefügt wird durch Reaktion zwischen der reaktiven Gruppe (A1) und der Carboxylgruppe (A3) in einem molaren Verhältnis der reaktiven Gruppen (A1) zu den Carboxylgruppen (A3) von mindestens 1, wodurch ein polymerer Polyalkohol mit acetalgeschützten Hydroxylgruppen (A2') und n dendritischen Zweigen, die eine Generation umfassen, erhalten wird, wobei die acetalgeschützten Hydroxylgruppen (A2') gegebenenfalls mittels Acetalspaltung entschützt werden, wodurch ein polymerer Polyalkohol mit reaktiven Hydroxylgruppen (A2) erhalten wird; und wobei
- (iii) weitere Verzweigungsgenerationen hinzugefügt werden in g - 1 wiederholten Schritten durch Reaktion zwischen reaktiven Hydroxylgruppen (A2), die durch Entschützung mittels Acetalspaltung erhalten werden, und Carboxylgruppen (A3) in einem molaren Verhältnis von Hydroxylgruppen (A2) zu Carboxylgruppen (A3) von mindestens 1, wodurch ein polymerer Polyalkohol mit acetalgeschützten Hydroxylgruppen (A2') und n dendritischen Zweigen, die zwei oder mehr Generationen umfassen, erhalten wird, wobei die acetalgeschützten Hydroxylgruppen (A2') gegebenenfalls mittels Acetalspaltung entschützt werden, wodurch ein polymerer Polyalkohol mit reaktiven Hydroxylgruppen (A2) erhalten wird, und
- gegebenenfalls (iv) auf Schritt (ii) und/oder jede Wiederholung von Schritt (iii) einzeln
   (a) eine teilweise Schützung, wie beispielsweise Schützung als Acetal, Ketal und/oder Ester von verfügbaren reaktiven Hydroxylgruppen (A2), wodurch ein polymerer Polyalkohol mit mindestens einer reaktiven Hydroxylgruppe (A2) für die Verwendung in Schritt (iii) oder in einem wiederholten Schritt (ii) erhalten wird, und/oder
   (b) der Zusatz des optionalen Abstandshalterkettenverlängerers, was nach Entschützung der geschützten Hydroxylgruppe (A2") einen polymeren Polyalkohol mit reaktiven Hydroxylgruppen (A2) für die Verwendung in Schritt (iii) oder einem wiederholten Schritt (iii) und n dendritische Zweige ergibt, die eine oder mehrere Verzweigungsgenerationen umfassen, und mindestens eine Abstandshaltergeneration zumindest eine Teilgeneration ist; folgt.

Die erfindungsgemäßen Bindemittelmischungen und die entsprechenden erfindungsgemäßen Beschichtungsmittel können neben den erfindungswesentlichen hydroxyfunktionellen Polyestern (A) ggf. noch weitere hydroxylgruppenhaltige Verbindungen (C) enthalten. Als weitere hydroxylgruppenhaltige Verbindungen (C) können sowohl niedermolekulare Polyole als auch oligo- und/oder polymere Polyole eingesetzt werden. Besonders bevorzugt sind als Komponente (C) von der Komponente (A) verschiedene Polyesterpolyole, Polyurethanpolyole, Polysiloxanpolyole und insbesondere Polyacrylatpolyole und/oder Polymethacrylatpolyole sowie deren Mischpolymerisate. Diese optionalen Verbindungen (C) werden im Allgemeinen in einer Menge von 0 bis 30 Gew.-%, bezogen auf das Gesamtgewicht des Beschichtungsmittels, eingesetzt.

### Der Katalysator (D)

Es ist erfindungswesentlich, dass die erfindungsgemäßen Bindemittelmischungen und die erfindungsgemäßen Beschichtungsmittel mindestens einen phosphorhaltigen und stickstoffhaltigen Katalysator (D) enthalten. Dabei können auch Mischungen aus zwei oder mehreren verschiedenen Katalysatoren (D) eingesetzt werden.

Beispiele für geeignete Katalysatoren (D) sind aminblockierte substituierte Phosphonsäurediester und aminblockierte Diphosphonsäurediester, vorzugsweise aus der Gruppe, bestehend aus aminblockierten acyclischen Phosphonsäurediestern, aminblockierten cyclischen Phosphonsäurediestern, aminblockierten acyclischen Diphosphonsäurediestern und aminblockierten cyclischen Diphosphonsäurediestern. Die entsprechenden unblockierten phosphorhaltigen Katalysatoren sind beispielsweise in der deutschen Patentanmeldung DE-A-102005045228 beschrieben. Insbesondere werden aber aminblockierte substituierte Phosphorsäuremonoester und Phosphorsäurediester, vorzugsweise aus der Gruppe, bestehend aus aminblockierten acyclischen Phosphorsäurediestern und aminblockierten cyclischen Phosphorsäurediestern, eingesetzt. Eine Blockierung der Katalysatoren auf Phosphor - Basis mit Aminen ist notwendig, um die Lagerstabilität der resultierenden Formulierungen gewährleisten zu können.

Zur Herstellung der erfindungsgemäß eingesetzten aminblockierten Katalysatoren (D) geeignet sind die acyclischen Phosphorsäurediester (D) insbesondere aus der Gruppe, bestehend aus acyclischen Phosphorsäurediestern (D) der allgemeinen Formel (II): 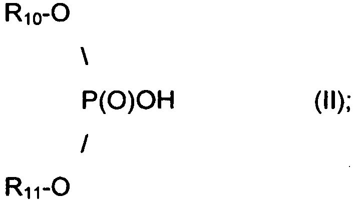 ausgewählt, wobei die Reste R₁₀ und R₁₁ aus der Gruppe, bestehend aus:
- substituiertem und unsubstituiertem Alkyl- mit 1 bis 20, vorzugsweise 2 bis 16 und insbesondere 2 bis 10 Kohlenstoffatomen, Cycloalkylmit 3 bis 20, vorzugsweise 3 bis 16 und insbesondere 3 bis 10 Kohlenstoffatomen und Aryl- mit 5 bis 20, vorzugsweise 6 bis 14 und insbesondere 6 bis 10 Kohlenstoffatomen,
- substituiertem und unsubstituiertem Alkylaryl-, Arylalkyl-, Alkylcycloalkyl-, Cycloalkylalkyl-, Arylcycloalkyl-, Cycloalkylaryl-, Alkylcycloalkylaryl-, Alkylarylcycloalkyl-, Arylcycloalkylalkyl-, Arylalkylcycloalkyl-, Cycloalkylalkylaryl- und Cycloalkylarylalkyl-, wobei die hierin enthalten Alkyl-, Cycloalkyl- und Arylgruppen jeweils die vorstehend aufgeführte Anzahl von Kohlenstoffatomen enthalten und
- substituiertem und unsubstituiertem Rest- der vorstehend aufgeführten Art, enthaltend mindestens ein, insbesondere ein, Heteroatom, ausgewählt aus der Gruppe bestehend aus Sauerstoffatom, Schwefelatom, Stickstoffatom, Phosphoratom und Siliziumatom, insbesondere Sauerstoffatom, Schwefelatom und Stickstoffatom
ausgewählt werden und zusätzlich auch Wasserstoff darstellen können (Teilveresterung).

Besonders bevorzugt werden als Katalysator (D) aminblockierte Phosphorsäurealkylester und Phosphorsäurephenylester, ganz besonders bevorzugt aminblockierte Phosphorsäurephenylester, eingesetzt.

Zur Erreichung der geforderten elektrischen Widerstände des Beschichtungsmittels bzw. der Bindemittelmischung ist es erfindungswesentlich, dass der Katalysator (D) mit einem oder mehreren Aminen der Formel (I) 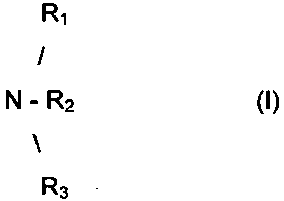 blockiert ist, wobei
R₁ ein acyclischer aliphatischer oder araliphatischer Kohlenwasserstoffrest mit mindestens 3 C-Atomen,
R₂ ein gleicher oder von R₁ und/oder R₃ verschiedener acyclischer aliphatischer oder araliphatischer Kohlenwasserstoffrest und
R₃ Wasserstoff oder ein gleicher oder von R₁ und/oder R₂ verschiedener acyclischer aliphatischer oder araliphatischer Kohlenwasserstoffrest ist.

Katalysatoren auf der Basis von Phosphor zeigen nämlich in wässrigen Lösungen eine besonders hohe molare Leitfähigkeit, insbesondere die Anionen, wenn sie zu höheren Phosphaten (Diphosphate, Triphosphate und höhere Analoge) kondensieren, wie in David R. Lide, CRC Handbook of Chemistry and Physics, 73rd Edition, 1992 - 1993, S. 5-112, beschrieben.

Die erfindungsgemäße Kombination der genannten Katalysatoren mit Blockierungsmitteln, die mindestens ein Amin der Formel (I) enthalten, führt überraschenderweise zu einer deutlichen Absenkung der Leitfähigkeit, d. h. zu einer Erhöhung des elektrischen Widerstandes, selbst wenn die Phosphor - basierten Katalysatoren (D) in einer Konzentration von mindestens 1 Gew. % bezogen auf die nicht flüchtigen Bestandteile der erfindungsgemäßen Bindemittelmischung, eingesetzt werden, was für die Erreichung der mechanisch - technologischen Eigenschaften der resultierenden Beschichtungen notwendig ist.

In der Formel (I) ist R₁ ein acyclischer aliphatischer oder araliphatischer Kohlenwasserstoffrest mit mindestens 3 C-Atomen. R₂ ist ein gleicher oder von R₁ und/oder R₃ verschiedener acyclischer aliphatischer oder araliphatischer Kohlenwasserstoffrest. R₁, R₂ und R₃ können neben rein aliphatischen, acyclischen Strukturen auch aromatische Strukturen enthalten. R₃ steht für Wasserstoff oder ist gleich R₁ oder ist gleich R₂ oder ist ein von R₁ und R₂ verschiedener acyclischer aliphatischer oder araliphatischer Kohlenwasserstoffrest. R₃ kann ebenfalls neben rein aliphatischen Strukturen auch aromatische Strukturen enthalten.

Bevorzugt werden tertiäre Amine der Formel (I) eingesetzt, da diese den Vorteil aufweisen, dass sie nicht mit den anderen Bestandteilen des Beschichtungsmittels, insbesondere den isocyanatgruppenhaltigen Verbindungen (B), reagieren können.

Bevorzugt werden Amine der Formel (I) eingesetzt, bei denen mindestens einer der Reste R₁, R₂ und R₃, bevorzugt mindestens 2 der Reste R₁, R₂ und R₃, aliphatische Kohlenwasserstoffreste mit 6 bis 18 C-Atomen, besonders bevorzugt mit 8 bis 14 C-Atomen, sind.

Insbesondere werden Amine der Formel (I) eingesetzt, bei denen mindestens einer der Reste R₁, R₂ und R₃ ein verzweigter aliphatischer Kohlenwasserstoffrest ist. Besonders bevorzugt werden Amine der Formel (I) eingesetzt, bei denen mindestens 2 der Reste R₁, R₂ und R₃ und bevorzugt alle 3 Reste R₁, R₂ und R₃ verzweigte aliphatische Kohlenwasserstoffreste sind. Ganz besonders bevorzugt werden Amine der Formel (I) eingesetzt, bei denen mindestens einer, insbesondere zwei und ganz besonders bevorzugt alle der Reste R₁, R₂ und R₃ verzweigte aliphatische Kohlenwasserstoffreste mit mindestens 3 C-Atomen, bevorzugt mit 6 bis 18 C-Atomen, besonders bevorzugt mit 8 bis 14 C-Atomen, sind.

Durch die Verwendung von Aminen der Formel (I), bei denen mindestens einer der Reste R1, R2 und R3 ein verzweigter aliphatischer Kohlenwasserstoffrest ist, gelingt die Bereitstellung von Beschichtungsmitteln, die nicht nur die geforderten elektrischen Widerstände gewährleisten, sondern gleichzeitig auch eine Kristallisation des blockierten Katalysators vermeiden. Selbstverständlich können erfindungsgemäß auch solche Amine der Formel (I) eingesetzt werden, die zu einer Kristallisation des blockierten Katalysators führen. Dies wird insbesondere bei Aminen (I) beobachtet, bei denen entweder R₃ Wasserstoff und R₁ sowie R₂ lineare aliphatische Kohlenwasserstoffreste sind oder alle Reste R₁, R₂ und R₃ lineare aliphatische Kohlenwasserstoffreste sind. Dann ist üblicherweise der Zusatz von Kristallisationsinhibitoren erforderlich, um ein Ausfällen der blockierten Katalysatoren zu vermeiden. Der Einsatz bzw. die Suche nach geeigneten Kristallisationsinhibitoren kann sich jedoch als schwierig erweisen.

Es ist erfindungsgemäß auch möglich, den Katalysator (D) nicht nur ausschließlich mit einem Amin der Formel (I) zu blockieren, sondern zur Blockierung der erfindungsgemäß eingesetzten Katalysatoren (D) auch eine Mischung aus 2 verschiedenen Aminen (I) oder eine Mischung aus mindestens einem Amin der Formel (I) mit mindestens einem davon verschiedenen Amin zu verwenden. So können beispielsweise Mischungen von sekundären oder tertiären Aminen (I) mit linearen Resten R₁, R₂ und/ oder R₃ und sekundären oder tertiären Aminen (I) mit mindestens einem verzweigten Rest, insbesondere mit Aminen (I), bei denen mindestens einer der Reste R₁, R₂ und R₃ ein verzweigter aliphatischer Kohlenwasserstoffrest mit 6 bis 18 C-Atomen, bevorzugt mit 8 bis 14 C-Atomen, ist, eingesetzt werden. Der Einsatz geeigneter Mischungen kann ebenfalls einer möglichen Kristallisation vorbeugen. Das verzweigte Amin (I) wirkt dann also als Kristallisationsinhibitor.

Besonders bevorzugt enthalten der aminblockierte phosphorhaltige Katalysator (D) oder die aminblockierten phosphorhaltigen Katalysatoren (D) mindestens ein tertiäres Amin der Formel (I) mit einer Konturlänge von mehr als 8 pm als Blockierungsmittel.

Die Konturlänge wird dabei abgeschätzt, indem das jeweilige Amin in seiner gesamten Ausdehnung unter Berücksichtigung der jeweiligen Hydridisierungen der einzelnen Atome und der daraus folgenden Bindungswinkel in eine Ebene projiziert wird. Diese Projektion wird wiederum verwendet, die maximale Ausdehnung des jeweiligen Moleküls auf eine Linie zu projizieren. Beispielhaft soll dies anhand der Abschätzung der Konturlänge des Pentylamins gezeigt werden.

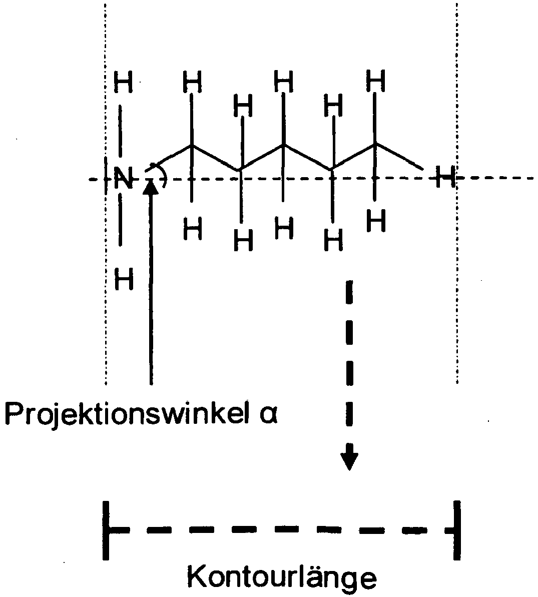

Da es sich jeweils um Senkrechtprojektionen handelt, werden die jeweiligen Kosinustransformationen zur Berechnung herangezogen:

| Bindung | Bindungs länge [pm] | An zahl | Alpha | Projizierte Länge [pm] | Beitrag zur Konturlänge [pm] |
|---|---|---|---|---|---|
| C - C | 154 | 4 | 30 ° | 134 | 536 |
| C - H | 110 | 1 | 30 ° | 95,3 | 95,3 |
| N - C | 101 | 1 | 30 ° | 86,6 | 86,6 |

Die Bindungslängen werden dabei aus der Literatur entnommen, siehe z. B. Marye A. Fox, James K. Whitesell: Organische Chemie. Spektrum Akademischer Verlag, 1995, ISBN 3860252496. Die gesamte Konturlänge ergibt sich aus der Summe der einzelnen Beiträge gemäß der Tabelle. In diesem Beispiel ergibt sich die Konturlänge von Pentylamin zu 536 pm + 95 pm + 87 pm = 718 pm.

Eine entsprechende Abschätzung der Konturlängen und der daraus resultierenden hydrodynamischen Volumina basiert auf der Annahme einer mittleren Bindungslänge von 154 pm sowie einem projizierten Bindungswinkel von 30° für die entsprechenden organischen Bindungen, die auf einer sp3 - Hybridisierung basieren. Ergänzend wird auf das Lehrbuch von H.-G- Elias, »Makromoleküle«, Hüthig & Wepf Verlag, Basel, Band 1, »Grundlagen«, Seite 51, verwiesen.

Als Beispiele für geeignete Amine (I), mit welchem die Phosphorsäureester blockiert werden, sind lineare aliphatische Amine wie Trioctylamin, Dioctylamin, Octyldimethylamin, Dinonylamin, Trinonylamin, Nonyldimethylamin, Tridodecylamin, Dodecyldimethylamin, u.ä. zu nennen. Bevorzugt werden verzweigte Amine, wie Di-(isopropanol)amin, Diisoamylamin, Diisobutylamin, Diisononylamin und insbesondere verzweigte tertiäre Amine, beispielsweise Isododecyl-dimethyl-amin, Tris-(2-ethylhexyl)amin, Triisoamylamin, Triisononylamin, Triisooctylamin und Triisopropylamin, ggf. zusammen mit linearen aliphatischen Aminen, eingesetzt.

Erfindungsgemäß ganz besonders bevorzugt werden als Katalysator (D) aminblockierte Phosphorsäurephenylester und hier insbesondere mit Tris-(2-ethylhexyl)amin, Dodecyldimethylamin und/oder Isododecyldimethylamin, ganz besonders bevorzugt mit Tris-(2-ethylhexyl)amin blockierte Phosphorsäurephenylester, eingesetzt.

Bestimmte, mit Amin blockierte Phosphorsäurekatalysatoren sind auch kommerziell erhältlich (z.B. Nacure-Typen der Fa. King Industries).

Die Katalysatoren werden vorzugsweise in Anteilen von mindestens 1,0 Gew.-%, bevorzugt in Anteilen von 2,0 bis 7,0 Gew.-% und besonders bevorzugt in Anteilen von 2,0 bis 5,0 Gew.-%, bezogen auf die nicht flüchtigen Bestandteile der erfindungsgemäßen Bindemittelmischung, eingesetzt. Eine geringere Wirksamkeit des Katalysators kann dabei durch entsprechend höhere Einsatzmengen teilweise kompensiert werden.

Um ein möglichst ausgewogenes Eigenschaftsprofil zu erreichen, ist in der Regel eine möglichst hohe Konzentration des blockierten Katalysators anzustreben. Dies hat den Vorteil, dass die Vernetzung der Silangruppen möglichst vollständig passiert und somit eine hohe Netzwerkdichte, folglich eine hohe Kratzbeständigkeit sowie eine gute Chemikalienbeständigkeit erreicht werden. Des Weiteren ist das Risiko von Nachvernetzungsprozessen dann besonders gering, wenn bereits direkt nach dem Ende des Aushärtevorgangs eine quasi vollständige Umsetzung der Silangruppen erreicht wird. Die Obergrenze bezüglich der einzusetzenden Katalysatormenge ist durch den elektrischen Widerstandswert gegeben, der spezifisch, je nach Vorgabe des Anlagenherstellers, variieren kann. Die erfindungsgemäßen Bindemittelmischungen und/oder die erfindungsgemäßen Beschichtungsmittel können noch einen weiteren Amin-Katalysator auf Basis eines bicyclischen Amins, insbesondere eines ungesättigten bicyclischen Amins, enthalten. Beispiele für geeignete Amin-Katalysatoren sind 1,5-Diazabicyclo[4.3.0]non-5-en oder 1,8-Diazabicyclo[5.4.0]-undec-7-en.

Diese Amin-Katalysatoren werden vorzugsweise in Anteilen von 0,01 bis 20 Gew.-%, besonders bevorzugt in Anteilen von 0,1 bis 10 Gew.-%, bezogen auf die nicht flüchtigen Bestandteile der erfindungsgemäßen Bindemittelmischung, eingesetzt.

### Weitere Komponenten der Bindemittelmischung

Die Bindemittelmischung enthält üblicherweise noch mindestens ein organisches Lösemittel. Als Lösemittel für die erfindungsgemäße Bindemittelmischung sind insbesondere solche geeignet, die in der Bindemittelmischung und im Beschichtungsmittel chemisch inert gegenüber den Verbindungen (A), (B) und ggf. (C) sind und die auch bei der Härtung des Beschichtungsmittels nicht mit (A) und (B) reagieren. Beispiele für solche Lösemittel sind aliphatische und/oder aromatische Kohlenwasserstoffe wie Toluol, Xylol, Solventnaphtha, Solvesso 100 oder Hydrosol ® (Fa. ARAL), Ketone, wie Aceton, Methylethylketon oder Methylamylketon, Ester, wie Ethylacetat, Butylacetat, Pentylacetat oder Ethylethoxypropionat, Ether oder Mischungen aus den vorgenannten Lösemitteln. Bevorzugt weisen die aprotischen Lösemittel oder Lösemittelgemische einen Wassergehalt von maximal 1 Gew.-%, besonders bevorzugt maximal 0,5 Gew.-%, bezogen auf das Lösemittel auf. Um eine gute Appearance zu gewährleisten, wird insbesondere ein hoher Anteil an Butylacetat als Lösungsmittel, besonders bevorzugt mindestens 60 Gew.-% Butylacetat, bezogen auf das Gesamtgewicht des Lösemittelgemisches, eingesetzt. Weitere Lösungsmittel kommen zum Einsatz, um die entsprechend gewünschten Verdunstungszahlen einzustellen.

Der Festkörpergehalt der erfindungsgemäßen Bindemittelmischung beträgt vorteilhaft mindestens 50 Gew.-%, bevorzugt mindestens 70 Gew.-%.

Schließlich kann die erfindungsgemäße Bindemittelmischung noch ein oder mehrere der unten beschriebenen üblichen und bekannten Lackadditive (F) enthalten.

### Die erfindungsgemäßen Beschichtungsmittel

### Die isocyanatgruppenhaltigen Verbindungen (B)

Die erfindungsgemäßen Beschichtungsmittel enthalten neben der obenbeschriebenen erfindungsgemäßen Bindemittelmischung mindestens eine gesättigte Verbindung (B) mit Isocyanatgruppen, die zumindest teilweise hydrolysierbare Silangruppen enthält.

Die als Grundkörper für die erfindungsgemäß bevorzugt eingesetzten isocyanatgruppenhaltigen Verbindungen (B) dienenden Di- und/oder Polyisocyanate sind bevorzugt an sich bekannte gesättigte substituierte oder unsubstituierte aromatische, aliphatische, cycloaliphatische und/oder heterocyclische Polyisocyanate. Beispiele für bevorzugte Polyisocyanate sind: 2,4-Toluoldiisocyanat, 2,6-Toluoldiisocyanat, Diphenylmethan-4,4'-diisocyanat, Diphenylmethan-2,4'-diisocyanat, p-Phenylendiisocyanat, Biphenyldiisocyanate, 3,3'-Dimethyl-4,4'-diphenylendiisocyanat, Tetramethylen-1,4-diisocyanat, Hexamethylen-1,6-diisocyanat, 2,2,4-Trimethylhexane-1,6-diisocyanat, Isophorondiisocyanat, Ethylendiisocyanat, 1,12-Dodecandiisocyanat, Cyclobutan-1,3-diisocyanat, Cyclohexan-1,3-diisocyanat, Cyclohexan-1,4-diisocyanat, Methylcyclohexyldiisocyanate, Hexahydrotoluol-2,4-diisocyanat, Hexahydrotoluol-2,6-diisocyanat, Hexahydrophenylen-1,3-diisocyanat, Hexahydrophenylen-1,4-diisocyanat, Perhydrodiphenylmethan-2,4'-diisocyanat, 4,4'-Methylendicyclohexyldiisocyanat (z.B. Desmodur ® W der Fa. Bayer AG), Tetramethylxylyldiisocyanate (z.B. TMXDI ® der Fa. American Cyanamid) und Mischungen der vorgenannten Polyisocyanate. Weiterhin bevorzugte Polyisocyanate sind die Biuret-Dimere und die Isocyanurat-Trimere der vorgenannten Diisocyanate.

Besonders bevorzugte Polyisocyanate PI sind Hexamethylen-1,6-diisocyanat, Isophorondiisocyanat und 4,4'-Methylendicyclohexyldiisocyanat, deren Biuret-Dimere und/oder Isocyanurat-Trimere.

In einer weiteren Ausführungsform der Erfindung sind die Polyisocyanate Polyisocyanat-Präpolymerisate mit Urethan-Struktureinheiten, welche durch Umsetzung von Polyolen mit einem stöchiometrischen Überschuss an vorgenannten Polyisocyanaten erhalten werden. Solche Polyisocyanat-Präpolymere sind beispielsweise in US-A-4, 598,131 beschrieben.

Es ist erfindungswesentlich, dass die isocyanatgruppenhaltige Verbindung (B) zumindest teilweise hydrolysierbare Silangruppen enthält. Diese hydrolysierbaren Silangruppen führen zum Aufbau des Si-O-Si Netzwerkes, welches in der endgehärteten Beschichtung statistisch verteilt ist. Dies bedeutet, dass es zu keiner gezielten Anreicherung oder Abreicherung des Si-O-Si Netzwerkes in bestimmten Bereichen der Beschichtung kommt.

Es ist bevorzugt, dass die Verbindung (B)
zwischen 2,5 und 97,5 mol-%, bezogen auf die Gesamtheit der Struktureinheiten (III) und (IV), mindestens einer Struktureinheit der Formel (III)

-N(X-SiR"x(OR')3-x)n(X'-SiR"y(OR')3-y)m (III)

wobei
R' = Wasserstoff, Alkyl oder Cycloalkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl, bevorzugt R' = Ethyl und/oder Methyl
X, X' = linearer und/oder verzweigter Alkylen oder Cycloalkylenrest mit 1 bis 20 Kohlenstoffatomen, bevorzugt X, X' = Alkylenrest mit 1 bis 4 Kohlenstoffatomen,
R" = Alkyl, Cycloalkyl, Aryl, oder Aralkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl, bevorzugt R" = Alkylrest, insbesondere mit 1 bis 6 C-Atomen,
n = 0 bis 2, m = 0 bis 2, m+n = 2 , sowie x, y = 0 bis 2,
und
zwischen 2,5 und 97,5 mol-%, bezogen auf die Gesamtheit der Struktureinheiten (III) und (IV), mindestens einer Struktureinheit der Formel (IV)

Z-(X-SiR"x(OR')3-x) (IV),

wobei
Z = -NH-, -NR-, mit
R = Alkyl, Cycloalkyl, Aryl oder Aralkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl ,
x = 0 bis 2, und
X, R', R" die bei Formel (III) angegebene Bedeutung haben,
aufweist.

Die jeweiligen bevorzugten Alkoxyreste (OR') können gleich oder verschieden sein, entscheidend für den Aufbau der Reste ist jedoch, inwiefern diese die Reaktivität der hydrolysierbaren Silangruppen beeinflussen.

Bevorzugt ist R' ein Alkylrest, insbesondere mit 1 bis 6 C-Atomen. Besonders bevorzugt sind Reste R', die die Reaktivität der Silangruppen erhöhen, d.h. gute Abgangsgruppen darstellen. Insofern ist ein Methoxy - Rest gegenüber einem Ethoxy - Rest und dieser wiederum gegenüber einem Propoxyrest bevorzugt. Besonders bevorzugt ist daher R' = Ethyl und/oder Methyl, insbesondere Methyl.

Des Weiteren kann die Reaktivität von organofunktionellen Silanen auch durch die Länge der Spacer X zwischen Silan - Funktionalität und organischer funktioneller Gruppe, die zur Reaktion mit dem modifizierenden Bestandteil dient, erheblich beeinflusst werden. Beispielhaft dafür seien die "alpha" - Silane genannt, die bei der Firma Wacker erhältlich sind, und bei denen eine Methylengruppe anstelle der bei "gamma"-Silane vorhandenen Propylengruppe zwischen Si-Atom und funktioneller Gruppe ist.

Die erfindungsgemäß besonders bevorzugten mit den Struktureinheiten (III) und (IV) funktionalisierten isocyanatgruppenhaltigen Verbindungen (B) werden besonders bevorzugt durch Umsetzung der vorgenannten Di- und/oder Polyisocyanate mit einer Verbindung der Formel (IIIa)

HN(X-SiR"x(OR')3-x)n(X'-SiR"y(OR')3-y)m (IIIa),

und einer Verbindung der Formel (IVa)

H-Z-(X-SiR"x(OR')3-x) (IVa),

erhalten, wobei die Substituenten die obengenannte Bedeutung haben.

Erfindungsgemäß bevorzugte Verbindungen (IIIa) sind Bis(2-ethyltrimethoxysilyl)amin, Bis(3-propyltrimethoxysilyl)amin, Bis(4-butyltrimethoxysilyl)amin, Bis(2-ethyltriethoxysilyl)amin, Bis(3-propyltriethoxysilyl)amin und/- oder Bis(4-butyltriethoxysilyl)amin. Ganz besonders bevorzugt ist Bis(3-propyltrimethoxysilyl)amin. Solche Aminosilane sind beispielsweise unter dem Markennamen DYNASYLAN ® der Fa. DEGUSSA bzw. Silquest ® der Fa. OSI verfügbar.

Erfindungsgemäß bevorzugte Verbindungen (IVa) sind Aminoalkyl-trialkoxysilane, wie vorzugsweise 2-Aminoethyltrimethoxysilan, 2-Aminoethyltriethoxysilan, 3-Aminopropyltrimethoxysilan, 3-Aminopropyltriethoxysilan, 4-Aminobutyltrimethoxysilan, 4-Aminobutyltriethoxysilan. Besonders bevorzugte Verbindungen (IVa) sind N-(2- (trimethoxysilyl)ethyl)alkylamine, N-(3-(trimethoxysilyl)propyl)alkylamine, N-(4-(trimethoxysilyl)butyl) alkylamine, N-(2-(triethoxysilyl)ethyl)alkylamine, N-(3-(triethoxysilyl)propyl)-alkylamine und/oder N-(4-(triethoxysilyl)butyl)alkylamine. Ganz besonders bevorzugt ist N-(3-(trimethoxysilyl) propyl)butylamin. Solche Aminosilane sind beispielsweise unter dem Markennamen DYNASYLAN ® der Fa. DEGUSSA bzw. Silquest ® der Fa. OSI verfügbar.

Die erfindungsgemäß ganz besonders bevorzugten mit den Struktureinheiten (III) und (IV) funktionalisierten isocyanatgruppenhaltigen Verbindungen (B) werden besonders bevorzugt durch Umsetzung der vorgenannten Di- und/oder Polyisocyanate mit den vorgenannten Verbindungen (IIIa) und (IVa) hergestellt, indem
zwischen 2,5 und 90 mol-%, bevorzugt 5 bis 85 mol-%, besonders bevorzugt 7,5 bis 80 mol-%, der Isocyanatgruppen im Polyisocyanatgrundkörper mit mindestens einer Verbindung (IIIa) und
zwischen 2,5 und 90 mol-%, bevorzugt 5 bis 85 mol-%, besonders bevorzugt 7,5 bis 80 mol-%, der Isocyanatgruppen im Polyisocyanatgrundkörper mit mindestens einer Verbindung (IVa)
umgesetzt werden.

Der Gesamtanteil der mit den Verbindungen (IIIa) und (IVa) umgesetzten Isocyanatgruppen liegt in der Polyisocyanatverbindung (B) zwischen 5 und 95 mol-%, bevorzugt zwischen 10 und 90 mol-%, besonders bevorzugt zwischen 15 und 85 mol-% der Isocyanatgruppen im Polyisocyanatgrundkörper.

Ganz besonders bevorzugte isocyanatgruppenhaltige Verbindungen (B) sind Umsetzungsprodukte von Hexamethylen-1,6-diisocyanat und/oder Isophorondiisocyanat, und/oder deren Isocyanurat-Trimere mit Bis(3-propyltrimethoxysilyl)amin und N-(3-(trimethoxysilyl) propyl)butylamin.

Der Festkörpergehalt des erfindungsgemäß eingesetzten Polyisocyanathärters (B) beträgt vorteilhaft mindestens 50 Gew.-%, bevorzugt mindestens 70 Gew.-%.

Bevorzugt enthält der erfindungsgemäß eingesetzte Polyisocyanathärter wenigstens einen Wasserfänger, beispielsweise reaktive Silane mit einer höheren Reaktivität gegenüber Wasser als Isocyanate. Vorteilhaft werden als Wasserfänger insbesondere Orthoameisensäuretrialkylester verwendet. Als Wasserfänger wird besonders bevorzugt Triethylorthoformiat verwendet. Vorzugsweise werden 0,01 Gew.-% bis 10 Gew.-%, bevorzugt 0,03 Gew.-% bis 5,0 Gew.-%, mindestens eines Wasserfängers bezogen auf den Gesamtgehalt des Beschichtungsmittels an nichtflüchtigen Anteilen, zugesetzt.

Die Umsetzung der isocyanatgruppenhaltigen Verbindungen (B) mit den Verbindungen (IIIa) und (IVa) erfolgt vorzugsweise in Inertgasatmosphäre bei Temperaturen von maximal 100 °C, bevorzugt von maximal 60 °C. Bevorzugt erfolgt die Umsetzung der isocyanatgruppenhaltigen Verbindungen (B) mit den Verbindungen (IIIa) und (IVa) in einem Lösemittel oder in einem Lösemittelgemisch in Gegenwart wenigstens eines Wasserfängers und in Gegenwart wenigstens eines Amins, bevorzugt in Gegenwart mindestens eines tertiären Amins, wie beispielsweise 1,4-Diazabicyclo[2.2.2]octan (DABCO), Triethylamin und Diisopropylethylamin, insbesondere Triethylamin.

Bevorzugt werden während der Synthese mindestens 1 Gew.-%, bevorzugt mindestens 2 Gew.-%, besonders bevorzugt mindestens 3 Gew.-% und ganz besonders bevorzugt mindestens 4 Gew.-% mindestens eines Wasserfängers, bevorzugt Triethylorthoformiat, bezogen auf den Gesamtgehalt der Reaktionsmischung an nichtflüchtigen Anteilen, zugesetzt.

Bevorzugt wird das Amin während der Synthese in einer Menge von 2 bis 6 Gew.-%, bezogen auf Gesamtgehalt der Reaktionsmischung an nichtflüchtigen Anteilen, eingesetzt. Besonders bevorzugt wird Triethylamin während der Synthese in einer Menge von 1,5 bis 3,5 Gew.-%, bezogen auf den Gesamtgehalt der Reaktionsmischung an nichtflüchtigen Anteilen, eingesetzt.

Das Lösemittel bzw. Lösemittelgemisch, in dem die Polyisocyanathärter hergestellt werden, kann aus aromatischen Kohlenwasserstoffen wie 1,2,4-Trimethylbenzol, Mesitylen, Xylol, Propylbenzol und Isopropylbenzol bestehen. Ein Beispiel für ein geeignetes Lösemittelgemisch aus aromatischen Kohlenwasserstoffen ist Solventnaphtha. Das Lösemittel, in dem die Polyisocyanathärter hergestellt werden, kann auch aus aliphatischen Kohlenwasserstoffen, Ketonen, wie Aceton, Methylethylketon oder Methylamylketon, Estern, wie Ethylacetat, Butylacetat, Pentylacetat oder Ethylethoxypropionat, Ether oder Mischungen aus den vorgenannten Lösemitteln bestehen, wobei Lösemittelgemische mit einem hohen Anteil an Butylacetat, insbesondere mindestens 60 Gew.-% Butylacetat, bezogen auf das Gesamtgewicht des Lösemittelgemisches, bevorzugt sind. Besonders bevorzugt enthält das Lösemittelgemisch mindestens 80 Gew.-% Butylacetat, insbesondere mindestens 95 Gew.-% Butylacetat. Ganz besonders vorteilhaft wird in reinem Butylacetat gearbeitet.

Alternativ kann der Polyisocyanathärter auch bevorzugt dadurch hergestellt werden, dass in einem ersten Schritt im Mittel pro Molekül maximal eine der Isocyanatgruppen des Polyisocyanates mit dem aminofunktionellen Alkoxysilan umgesetzt wird und in einem zweiten Schritt das erhaltene Zwischenprodukt durch Dimerisierung, Trimerisierung, Urethan-, Biuret- oder Allophanatbildung zu einem Polyisocyanat umgesetzt wird.

Die freien Isocyanatgruppen des isocyanatgruppenhaltigen Verbindungen B können auch in blockierter Form eingesetzt werden. Dies ist bevorzugt dann der Fall, wenn die erfindungsgemäßen Beschichtungsmittel als einkomponentige Systeme eingesetzt werden. Zur Blockierung kann im Prinzip jedes für die Blockierung von Polyisocyanaten einsetzbare Blockierungsmittel mit einer ausreichend tiefen Deblockierungstemperatur eingesetzt werden. Derartige Blockierungsmittel sind dem Fachmann gut geläufig. Bevorzugt werden Blockierungsmittel, wie sie in EP-A-0 626 888 und EP-A-0 692 007 beschrieben sind, eingesetzt.

### Die Kombination der Komponenten A, B, ggf. C und D sowie weitere Komponenten des Beschichtungsmittels

Der Gewichtsanteil der einzusetzenden hydroxylgruppenhaltigen Polyester (A), bezogen auf den Gewichtsanteil der isocyanatgruppenhaltigen Verbindungen (B), hängt vom Hydroxyäquivalentgewicht des Polyesters und vom Äquivalentgewicht der freien Isocyanatgruppen des Polyisocyanates ab.

Im erfindungsgemäßen Beschichtungsmittel sind bevorzugt 2,5 bis 97,5 mol-%, bezogen auf die Summe der Struktureinheiten (III) und (IV), an Struktureinheiten (III) und 2,5 bis 97,5 mol-%, bezogen auf die Summe der Struktureinheiten (III) und (IV), an Struktureinheiten (IV) vorhanden.

Die erfindungsgemäßen Beschichtungsmittel enthalten bevorzugt zwischen 2,5 und 97,5 Gew.-%, besonders bevorzugt zwischen 5 und 95 Gew.-%, ganz besonders bevorzugt zwischen 10 und 90 Gew.-%, insbesondere zwischen 20 und 80 Gew.-%, bezogen auf den Gehalt an nichtflüchtigen Substanzen im Beschichtungsmittel, des hydroxylgruppenhaltigen Polyesters (A) und bevorzugt zwischen 2,5 und 97,5 Gew.-%, besonders bevorzugt zwischen 5 und 95 Gew.-%, ganz besonders bevorzugt zwischen 10 und 90 Gew.-%, insbesondere zwischen 20 und 80 Gew.-%, bezogen auf den Gehalt an nichtflüchtigen Substanzen im Beschichtungsmittel, der isocyanatgruppenhaltigen Verbindungen (B).

Bezogen auf die Summe der für die Vernetzung im erfindungsgemäßen Beschichtungsmittel maßgeblichen funktionellen Gruppen, gebildet aus den Anteilen der Hydroxyl- und Isocyanatgruppen sowie den Anteilen der Strukturelemente (III) und (IV), sind die Strukturelemente (III) und (IV) bevorzugt in Anteilen von 2,5 bis 97,5 mol-%, besonders bevorzugt zwischen 5 und 95 mol-% und ganz besonders bevorzugt zwischen 10 und 90 mol-% vorhanden.

Um weiter verbesserte Beständigkeiten der erfindungsgemäßen Beschichtungen gegen Rissbildung bei UV-Strahlung und Feucht-Trockenwechsel im CAM180-Test (nach DIN EN ISO 11341 Feb 98 und DIN EN ISO 4892-2 Nov 00) in Kombination mit einer hohen Kratzfestigkeit direkt im Anschluss an die thermische Härtung, einen hohen Glanz und einen hohen Glanzerhalt nach Bewitterung zu gewährleisten, ist es außerdem bevorzugt, den Gehalt an Struktureinheiten (III) und/oder (IV) maximal so hoch zu wählen, dass die erfindungsgemäßen Beschichtungsmittel weniger als 6,5 Massen-% Si der Struktureinheiten (III) und/oder (IV), ganz besonders maximal 6,0 Massen-% Si der Struktureinheiten (III) und/oder (IV), jeweils bezogen auf den Feststoffgehalt der Beschichtungsmittel, enthalten. Der Silangehalt in Masse-% Si wird dabei rechnerisch aus den eingesetzten Mengen an den Verbindungen (IIIa) und (IVa) ermittelt.

Die Gewichtsanteile des Polyesters (A), der ggf. eingesetzten Verbindung (C) und des Polyisocyanates (B) werden vorzugsweise solchermaßen gewählt, dass das molare Äquivalent-Verhältnis der nicht umgesetzten Isocyanatgruppen der isocyanatgruppenhaltigen Verbindungen (B) zu den Hydroxylgruppen des Polyesters (A) und der ggf. eingesetzten Verbindung (C) zwischen 0,9:1,0 und 1,2:1,0, bevorzugt zwischen 0,95 : 1,0 und 1,1:1,0 besonders bevorzugt zwischen 0,98:1,0 und 1,05:1,0 liegt.

Handelt es sich um einkomponentige Beschichtungsmittel, so werden die isocyanatgruppenhaltigen Verbindungen (B) gewählt, deren freie Isocyanatgruppen mit den oben beschriebenen Blockierungsmitteln blockiert sind.

Bei den erfindungsgemäß bevorzugten 2-komponentigen (2K) Beschichtungsmitteln wird kurz vor der Applikation des Beschichtungsmittel die Bindemittelmischung, enthaltend den hydroxylgruppenhaltigen Polyester (A), ggf. (C), den Katalysator (D), einen Teil des Lösemittels sowie ggf. weitere nachfolgend beschriebene Komponenten, mit einer weiteren Lackkomponente, enthaltend die isocyanatgruppenhaltige Verbindung (B) und gegebenenfalls weitere der nachfolgend beschriebenen Komponenten in an sich bekannter Weise vermischt.

Als Lösemittel für die erfindungsgemäßen Beschichtungsmittel sind insbesondere solche geeignet, die im Beschichtungsmittel chemisch inert gegenüber den Verbindungen (A), (B) und ggf. (C) sind und die auch bei der Härtung des Beschichtungsmittels nicht mit (A) und (B) reagieren. Beispiele für solche Lösemittel sind aliphatische und/oder aromatische Kohlenwasserstoffe wie Toluol, Xylol, Solventnaphtha, Solvesso 100 oder Hydrosol ® (Fa. ARAL), Ketone, wie Aceton, Methylethylketon oder Methylamylketon, Ester, wie Ethylacetat, Butylacetat, Pentylacetat oder Ethylethoxypropionat, Ether oder Mischungen aus den vorgenannten Lösemitteln. Bevorzugt weisen die aprotischen Lösemittel oder Lösemittelgemische einen Wassergehalt von maximal 1 Gew.-%, besonders bevorzugt maximal 0,5 Gew.-%, bezogen auf das Lösemittel auf. Um eine gute Appearance zu gewährleisten, wird insbesondere ein hoher Anteil an Butylacetat als Lösungsmittel, besonders bevorzugt mindestens 60 Gew.-% Butylacetat, bezogen auf das Gesamtgewicht des Lösemittelgemisches, eingesetzt. Weitere Lösungsmittel kommen zum Einsatz, um die entsprechend gewünschten Verdunstungszahlen einzustellen.

Neben den Verbindungen (A), (B) und (C) können noch weitere Bindemittel (E) eingesetzt werden, welche vorzugsweise mit den Hydroxylgruppen des Polyesters (A) und/oder mit den freien Isocyanatgruppen der Verbindung (B) und/oder mit den Alkoxysilylgruppen der Verbindungen (B) und/oder (C) reagieren und Netzwerkpunkte ausbilden können.

Beispielsweise sind als Komponente (E) Aminoplastharze und/oder Epoxydharze, verwendbar. Es kommen die üblichen und bekannten Aminoplastharze in Betracht, deren Methylol- und/oder Methoxymethylgruppen teilweise mittels Carbamat- oder Allophanatgruppen defunktionalisiert sein können. Vernetzungsmittel dieser Art werden in den Patentschriften US-A-4 710 542 und EP-B-0 245 700 sowie in dem Artikel von B. Singh und Mitarbeiter "Carbamylmethylated Melamines, Novel Crosslinkers for the Coatings Industry" in Advanced Organic Coatings Science and Technology Series, 1991, Band 13, Seiten 193 bis 207, beschrieben.

In der Regel werden solche Komponenten (E) in Anteilen von bis zu 40 Gew.-%, bevorzugt von bis zu 30 Gew.-%, besonders bevorzugt von bis zu 25 Gew.-%, bezogen auf die nichtflüchtigen Bestandteile des Beschichtungsmittels, eingesetzt.

Darüber hinaus kann die erfindungsgemäße Bindemittelmischung bzw. das erfindungsgemäße Beschichtungsmittel mindestens ein übliches und bekanntes Lackadditiv (F) in wirksamen Mengen, d.h. in Mengen vorzugsweise bis zu 30 Gew.-%, besonders bevorzugt bis zu 25 Gew.-% und insbesondere bis zu 20 Gew.-%, jeweils bezogen auf die nichtflüchtigen Bestandteile des Beschichtungsmittels, enthalten.

Beispiele geeigneter Lackadditive (F) sind:
- insbesondere UV-Absorber;
- insbesondere Lichtschutzmittel wie HALS-Verbindungen, Benztriazole oder Oxalanilide;
- Radikalfänger;
- Slipadditive;
- Polymerisationsinhibitoren;
- Entschäumer;
- Reaktivverdünner, wie sie aus dem Stand der Technik allgemein bekannt sind, welche bevorzugt inert gegenüber den -Si(OR)3-Gruppen sind.
- Netzmittel wie Siloxane, fluorhaltige Verbindungen, Carbonsäurehalbester, Phosphorsäureester, Polyacrylsäuren und deren Copolymere oder Polyurethane;
- Haftvermittler wie Tricyclodecandimethanol;
- Verlaufmittel;
- filmbildende Hilfsmittel wie Cellulose-Derivate;
- Füllstoffe wie beispielsweise Nanopartikel auf der Basis von Siliziumdioxid, Aluminiumoxid oder Zirkoniumoxid; ergänzend wird noch auf das Römpp Lexikon »Lacke und Druckfarben« Georg Thieme Verlag, Stuttgart, 1998, Seiten 250 bis 252, verwiesen;
- rheologiesteuernde Additive, wie die aus den Patentschriften WO 94/22968, EP-A-0 276 501, EP-A-0 249 201 oder WO 97/12945 bekannten Additive; vernetzte polymere Mikroteilchen, wie sie beispielsweise in der EP-A-0 008 127 offenbart sind; anorganische Schichtsilikate wie Aluminium-Magnesium-Silikate, Natrium-Magnesium- und Natrium-Magnesium-Fluor-Lithium-Schichtsilikate des Montmorillonit-Typs; Kieselsäuren wie Aerosile®; oder synthetische Polymere mit ionischen und/oder assoziativ wirkenden Gruppen wie Polyvinylalkohol, Poly(meth)acrylamid, Poly(meth)acrylsäure, Polyvinylpyrrolidon, Styrol-Maleinsäureanhydrid- oder Ethylen-Maleinsäure-anhydrid-Copolymere und ihre Derivate oder hydrophob modifizierte ethoxylierte Urethane oder Polyacrylate;
- Flammschutzmittel und /oder
- die bereits oben aufgeführten Wasserfänger und/oder Kristallisationsinhibitoren.

Insbesondere Lichtschutzmittel aus Basis sterisch gehinderter Amine (HALS), Lichtschutzmittel auf Basis von UV-Absorbern, wie Benztriazole oder Oxalanilide, sowie Rheologiehilfsmittel können ebenfalls den elektrischen Widerstand der sie enthaltenden Lackkomponente bzw. des Beschichtungsmittels ungünstig beeinflussen, also erniedrigen, so dass deren Einsatzmengen nicht zu hoch gewählt werden sollten. Andererseits werden diese Additive aber auch bevorzugt in gewissen Mindestmengen eingesetzt, um die gewünschten mechanisch-technologischen Eigenschaften der Beschichtungsmittel bzw. Beschichtungen zu gewährleisten. Die Einsatzmengen können aber vom Fachmann anhand weniger Routineversuche leicht ermittelt werden.

Bevorzugt sind daher Bindemittelmischungen bzw. Beschichtungsmittel, die mindestens ein Lichtschutzmittel auf Basis sterisch gehinderter Amine (HALS) enthalten, wobei Bindemittelmischungen bzw. Beschichtungsmittel besonders bevorzugt sind, die mindestens ein Lichtschutzmittel auf Basis sterisch gehinderter Amine (HALS) in einer Konzentration von mehr als 0,5 Gew. % bis maximal 3,0 Gew.-%, jeweils bezogen auf die nichtflüchtigen Bestandteile des Beschichtungsmittels, enthalten.

Bevorzugt sind ebenfalls Bindemittelmischungen bzw. Beschichtungsmittel, die mindestens einen UV - Absorber enthalten, wobei Bindemittelmischungen bzw. Beschichtungsmittel besonders bevorzugt sind, die mindestens einen UV - Absorber in einer Konzentration von mehr als 0,5 Gew. % bis maximal 3,0 Gew.-%, jeweils bezogen auf die nichtflüchtigen Bestandteile des Beschichtungsmittels, enthalten.

Besonders bevorzugt sind Bindemittelmischungen bzw. Beschichtungsmittel, die mindestens ein Lichtschutzmittel auf Basis sterisch gehinderter Amine (HALS) und mindestens einen UV - Absorber enthalten.

Bevorzugt sind ebenfalls Bindemittelmischungen bzw. Beschichtungsmittel, die mindestens ein Rheologiehilfsmittel, besonders bevorzugt in einer Konzentration von mehr als 2 Gew. % bis maximal 10 Gew.-%, jeweils bezogen auf die nichtflüchtigen Bestandteile des Beschichtungsmittels, enthalten.

In einer weiteren Ausführungsform der Erfindung kann die erfindungsgemäße Bindemittelmischung bzw. das erfindungsgemäße Beschichtungsmittel noch weitere Pigmente und/oder Füllstoffe enthalten und zur Herstellung pigmentierter Topcoats dienen. Die dafür eingesetzten Pigmente und/oder Füllstoffe sind dem Fachmann bekannt.

Da die aus den erfindungsgemäßen Beschichtungsmitteln hergestellten erfindungsgemäßen Beschichtungen auch auf bereits ausgehärteten Elektrotauchlackierungen, Füllerlackierungen, Basislackierungen oder üblichen und bekannten Klarlackierungen hervorragend haften, eignen sie sich neben dem Einsatz in der Automobilserien(OEM)lackierung ausgezeichnet für die Autoreparaturlackierung oder die modulare Kratzfestausrüstung von bereits lackierten Automobilkarosserien.

Die Applikation der erfindungsgemäßen Beschichtungsmittel kann durch alle üblichen Applikationsmethoden, wie z.B. Spritzen, Rakeln, Streichen, Gießen, Tauchen, Tränken, Träufeln oder Walzen erfolgen. Dabei kann das zu beschichtende Substrat als solches ruhen, wobei die Applikationseinrichtung oder -anlage bewegt wird. Indes kann auch das zu beschichtende Substrat, insbesondere ein Coil, bewegt werden, wobei die Applikationsanlage relativ zum Substrat ruht oder in geeigneter Weise bewegt wird.

Vorzugsweise werden Spritzapplikationsmethoden angewandt, wie zum Beispiel Druckluftspritzen, Airless-Spritzen, Hochrotation, elektrostatischer Sprühauftrag (ESTA), gegebenenfalls verbunden mit Heißspritzapplikation wie zum Beispiel Hot-Air-Heißspritzen.

Die Aushärtung der applizierten erfindungsgemäßen Beschichtungsmittel kann nach einer gewissen Ruhezeit erfolgen. Die Ruhezeit dient beispielsweise zum Verlauf und zur Entgasung der Lackschichten oder zum Verdunsten von flüchtigen Bestandteilen wie Lösemittel. Die Ruhezeit kann durch die Anwendung erhöhter Temperaturen und/oder durch eine reduzierte Luftfeuchte unterstützt und/oder verkürzt werden, sofern hierbei keine Schädigungen oder Veränderungen der Lackschichten eintreten, etwa eine vorzeitige vollständige Vernetzung.

Die thermische Härtung der Beschichtungsmittel weist keine methodischen Besonderheiten auf, sondern erfolgt nach den üblichen und bekannten Methoden wie Erhitzen in einem Umluftofen oder Bestrahlen mit IR-Lampen. Hierbei kann die thermische Härtung auch stufenweise erfolgen. Eine weitere bevorzugte Härtungsmethode ist die Härtung mit nahem Infrarot (NIR-Strahlung).

Vorteilhafterweise erfolgt die thermische Härtung bei einer Temperatur von 30 bis 200°C, besonders bevorzugt 40 bis 190°C und insbesondere 50 bis 180°C während einer Zeit von 1 min bis zu 10 h, besonders bevorzugt 2 min bis zu 5 h und insbesondere 3 min bis 3 h, wobei bei den für die Automobilreparaturlackierung angewandten Temperaturen, die bevorzugt zwischen 30 und 90°C liegen, auch längere Härtzeiten zur Anwendung kommen können.

Die erfindungsgemäßen Beschichtungsmittel liefern neue gehärtete Beschichtungen, insbesondere Lackierungen, speziell Klarlackierungen, Formteile, speziell optische Formteile, und freitragende Folien, die hoch kratzfest und insbesondere chemikalien- und witterungsstabil sind und einen sehr guten optischen Gesamteindruck aufweisen. Insbesondere lassen sich die erfindungsgemäßen Beschichtungen und Lackierungen, speziell die Klarlackierungen, auch in Schichtdicken > 40 µm herstellen, ohne dass Spannungsrisse auftreten.

Die erfindungsgemäßen Beschichtungsmittel eignen sich daher hervorragend als dekorative, schützende und/oder effektgebende, hoch kratzfeste Beschichtungen und Lackierungen von Karosserien von Fortbewegungsmitteln (insbesondere Kraftfahrzeuge, wie Motorräder, Busse, LKW oder PKW) oder von Teilen hiervon; von Bauwerken im Innen- und Außenbereich; von Möbeln, Fenstern und Türen; von Kunststoffformteilen, insbesondere CDs und Fenster; von industriellen Kleinteilen, von Coils, Containern und Emballagen; von weißer Ware; von Folien; von optischen, elektrotechnischen und mechanische Bauteilen sowie von Glashohlkörpern und Gegenständen des täglichen Bedarfs.

Insbesondere werden die erfindungsgemäßen Beschichtungsmittel und Lackierungen, insbesondere die Klarlackierungen, in dem technologisch und ästhetisch besonders anspruchsvollen Gebiet der Automobilserienlackierung (OEM) sowie der Automobilreparaturlackierung eingesetzt. Besonders bevorzugt werden die erfindungsgemäßen Beschichtungsmittel in mehrstufigen Beschichtungsverfahren eingesetzt, insbesondere bei Verfahren, bei dem auf ein gegebenenfalls vorbeschichtetes Substrat zunächst eine pigmentierte Basislackschicht und danach eine Schicht mit den erfindungsgemäßen Beschichtungsmittel aufgetragen werden. Gegenstand der Erfindung sind daher auch effekt- und/oder farbgebende Mehrschichtlackierungen aus mindestens einer pigmentierten Basislackschicht und mindestens einer darauf angeordneten Klarlackschicht, die dadurch gekennzeichnet sind, dass die Klarlackschicht aus dem erfindungsgemäßen Beschichtungsmittel hergestellt worden ist.

Es können sowohl wasserverdünnbare Basislacke als auch Basislacke auf Basis von organischen Lösemitteln eingesetzt werden. Geeignete Basislacke sind beispielsweise in der EP-A-0 692 007 und in den dort in Spalte 3, Zeilen 50ff, angeführten Dokumenten beschrieben. Bevorzugt wird der aufgebrachte Basislack zunächst getrocknet, das heißt dem Basislackfilm wird in einer Abdunstphase wenigstens ein Teil des organischen Lösemittels beziehungsweise des Wassers entzogen. Die Trocknung erfolgt vorzugsweise bei Temperaturen von Raumtemperatur bis 80°C. Nach der Trocknung wird das erfindungsgemäße Beschichtungsmittel aufgebracht. Anschließend wird die Zweischichtlackierung bevorzugt unter bei der Automobilserienlackierung angewandten Bedingungen bei Temperaturen von 30 bis 200°C, besonders bevorzugt 40 bis 190°C und insbesondere 50 bis 180°C, während einer Zeit von 1 min bis zu 10 h, besonders bevorzugt 2 min bis zu 5 h und insbesondere 3 min bis 3 h, eingebrannt, wobei bei den für die Automobilreparaturlackierung angewandten Temperaturen, die bevorzugt zwischen 30 und 90°C liegen, auch längere Härtzeiten zur Anwendung kommen können.

Die mit dem erfindungsgemäßen Beschichtungsmittel erzeugten Schichten zeichnen sich vor allem durch eine besonders hohe Chemikalien- und Witterungsbeständigkeit sowie eine sehr gute Waschstraßenbeständigkeit und Kratzfestigkeit aus und zeigen gleichzeitig einen sehr guten optischen Gesamteindruck (sehr gutes Appearance).

In einer weiteren bevorzugten Ausführungsform der Erfindung wird das erfindungsgemäße Beschichtungsmittel als transparenter Klarlack zur Beschichtung von Kunststoffsubstraten, insbesondere von transparenten Kunststoffsubstraten, eingesetzt. In diesem Fall beinhalten die Beschichtungsmittel UV-Absorber, die in Menge und Art auch auf den wirksamen UV-Schutz des Kunststoffsubstrats ausgelegt sind. Auch hier zeichnen sich die Beschichtungsmittel durch eine herausragende Kombination von Kratzfestigkeit und Witterungsstabilität bei gleichzeitig sehr gutem Appearance aus. Die solchermaßen beschichteten Kunststoffsubstrate werden vorzugsweise für den Ersatz von Glaskomponenten im Automobilbau eingesetzt, wobei die Kunststoffsubstrate bevorzugt aus Polymethylmethacrylat oder Polycarbonat bestehen.

### Beispiele

### Herstellung des erfindungsgemäßen Polyesterpolyols A1

In einem mit einem Rührer, Rückflußkühler und Wasserabscheider versehenen Reaktor werden 1215,4 Gewichtsteile Isononansäure gegeben und mit 140 Gewichtsteilen Xylol versetzt. Die Mischung wird vorsichtig unter Rühren auf 80 °C erhitzt. Dann werden 2284,6 Gewichtsteile eines dendritischen hydroxyfunktionellen Polyesters (Bolton H 30, erhältlich von Perstorp) langsam hinzu gegeben, um Klumpenbildung zu vermeiden. Nach Zugabe wird das Reaktionsgemisch auf 200 °C aufgeheizt. Zur Überwachung des Reaktionsverlaufes wird das Volumen des Kondensats mitprotokolliert und von Zeit zu Zeit eine Probe zur Bestimmung der Hydroxylzahl entnommen. Nachdem die zuvor berechnete, einer vollständigen Umsetzung entsprechende Menge an Kondensat erreicht ist, wird der Xylolanteil destillativ entfernt. Das Reaktionsgemisch wird bei 200 °C gerührt, bis eine Säurezahl von weniger als 5 mg KOH/g (bestimmt gemäß DIN 53402) erreicht ist. Das Gemisch wird auf 145 °C abgekühlt und in 840 Gewichtsteilen Butylacetat gelöst.

Das resultierende Polyesterharz hat einen Festkörperanteil von 78,8 Gew.-%. Die resultierende Hydroxylzahl beträgt 190 mg KOH/g (bestimmt gemäß DIN 53240), die Säurezahl 5,8 mg KOH / g (DIN 53402).

### Herstellung des erfindungsgemäß blockierten Katalysators (D1) auf Phosphor - Basis (Blockierungsmittel Tris-(2-ethylhexyl)amin)

In einem 1000 ml Glaskolben werden 226,34 g Butylacetat und 94,65 g Phosphorsäurephenylester (75 %ig, in Butanol, erhältlich von der Fa. Isle Chem) vorgelegt. Die Mischung wird bei Raumtemperatur gerührt und homogenisiert. Anschließend werden 179,02 g Tris-(2-ethylhexyl)amin (erhältlich von BASF SE) langsam zugetropft, so dass 60°C nicht überschritten werden. Nach Zulaufende wird das Produkt noch 3 h bei 40°C gerührt.

### Herstellung des erfindungsgemäß blockierten Katalysators (D2) auf Phosphor - Basis (Blockierungsmittel Diisopropanolamin)

In einem 1000 ml Glaskolben werden 211,90 g Butylacetat und 187,00 g Phosphorsäurephenylester (75 %ig, in Butanol, erhältlich von der Fa. Isle Chem) vorgelegt. Die Mischung wird bei Raumtemperatur gerührt und homogenisiert. Anschließend werden 148,00 g Diisopropanolamin (= DIPA, erhältlich von BASF SE) langsam zugetropft, so dass 60°C nicht überschritten werden. Nach Zulaufende wird das Produkt noch 3 h bei 40°C gerührt.

### Herstellung des erfndungsgemäß blockierten Katalysators (D3) auf Phosphor - Basis (Blockierungsmittel Dimethyldodecylamin)

In einem 500 ml Glaskolben werden 42,00 g Butylacetat und 32,00 g Phosphorsäurephenylester (75 %ig, in Butanol, erhältlich von der Fa. Isle Chem) vorgelegt. Die Mischung wird bei Raumtemperatur gerührt und homogenisiert. Anschließend werden 26,00 g Dimethyldodecylamin (= DDA, erhältlich von ABCR, Karlsruhe) langsam zugetropft, so dass 60°C nicht überschritten werden. Nach Zulaufende wird das Produkt noch 3 h bei 40°C gerührt.

### Herstellung eines nicht erfindungsgemäß blockierten Katalysators (DV1) auf Phosphor - Basis (Blockierungsmittel DBU)

In einem 500 ml Glaskolben werden 53,25 g Hexanol und 17,75 g Butylacetat und 16,0 g Phosphorsäurephenylester (75 % ig in Butanol, erhältlich von der Fa. Isle Chem) vorgelegt. Die Mischung wird bei Raumtemperatur gerührt und homogenisiert. Anschließend werden 13,0 g Lupragen N 700 (1,8-Diazabicyclo-5, 4,0-undecene-7 = DBU, erhältlich von BASF SE) langsam zugetropft, so dass 60°C nicht überschritten werden. Nach Zulaufende wird das Produkt noch 3 h bei 40°C gerührt.

### Herstellung eines nicht erfindungsgemäß blockierten Katalysators (DV2) auf Phosphor - Basis (Blockierungsmittel DMEA)

In einem 1000 ml Glaskolben werden 195,2 g Butylacetat und 219,1 g Phosphorsäurephenylester (75 %ig, in Butanol, erhältlich von der Fa. Isle Chem) vorgelegt. Die Mischung wird bei Raumtemperatur gerührt und homogenisiert. Anschließend werden 85,7 g Dimethylethanolamin (= DMEA, erhältlich von BASF SE) langsam zugetropft, so dass 60°C nicht überschritten werden. Nach Zulaufende wird das Produkt noch 3 h bei 40°C gerührt.

### Herstellung eines nicht erfindungsgemäß blockierten Katalysators (DV3) auf Phosphor - Basis (Blockierungsmittel Morpholin)

In einem 1000 ml Glaskolben werden 198,6 g Butylacetat und 205,6 g Phosphorsäurephenylester (75 %ig, in Butanol, erhältlich von der Fa. Isle Chem) vorgelegt. Die Mischung wird bei Raumtemperatur gerührt und homogenisiert. Anschließend werden 95,8 g Morpholin (erhältlich von BASF SE) langsam zugetropft, so dass 60°C nicht überschritten werden. Nach Zulaufende wird das Produkt noch 3 h bei 40°C gerührt.

Die so erhaltene Lösung war zunächst lagerstabil. Nach 4 Wochen kristallisierte das Material jedoch aus und konnte als Reinstoff nur noch nach kurzem Erwärmen auf 60 °C und vollständiger Auflösung der Kristalle wieder eingesetzt werden.

### Herstellung eines Rheologiehilfsmittels F1 auf der Basis von Harnstoffen

Ein 5 I Juvo-Reaktionsgefäß mit Heizmantel, Thermometer, Rührer und mit aufgesetztem Kühler wurde mit 875,7 g eines aromatischen Lösemittels beschickt. Unter Rühren und Schutzgasatmosphäre (200 cm3/min Stickstoff) wurde das aromatische Lösemittel unter Überdruck (max. 3,5 bar) auf 160°C erhitzt. Mit Hilfe einer Messpumpe wurde eine Mischung aus 37,5 g Di-tert.-butylperoxid und 138,6 g eines aromatischen Lösemittels gleichmäßig und tropfenweise innerhalb von 4,75 h hinzugegeben. 0,25 h nach Beginn der Zugabe wurden mit Hilfe einer Messpumpe 848,4 g Styrol, 600,0 g n-Butylacrylat, 418,2 g Hydroxyethylacrylat und 38,4 g Methacrylsäure innerhalb von 4 h gleichmäßig hinzugegeben. Nach Beendigung der Zugabe wurde die Temperatur noch für 2 h gehalten und dann das Produkt auf 60°C abgekühlt und durch einen 5 µm GAF-Bag gefiltert. Das resultierende Harz hatte eine Säurezahl von 15 mg KOH/g (nach DIN 53402), einen Feststoffgehalt von 65% +/- 1 (60 min, 130°C) und eine Viskosität von 8,5 dPa * s gemäß der Versuchsvorschrift nach DIN ISO 2884-1 (55% in Solventnaphtha).

Ein 1 I-Reaktor wurde mit 423,5 g der Harzlösung befüllt und mit 29,4 g Butylacetat verdünnt. Danach wurden 11,2 g Benzylamin hinzugefügt und die Mischung für 30 min gerührt. Nach dieser Zeit wurde unter Aufwand hoher Scherkräfte eine Mischung von 8,8 g Hexamethylendiisocyanat und 17,1 g Butylacetat so hinzugefügt, dass eine Reaktionstemperatur von 40°C nicht überschritten wurde. Die so erhaltene Mischung hatte eine Viskosität von > 800mPas (10 s-1) (Z3) (DIN ISO 2884-1) und einen Feststoffgehalt von 59,0% (60 min, 130°C).

### Herstellung des erfindungsgemäßen teilsilanisierten Polyisocyanates B1 (HDI mit 10 mol-% IVa und 90 mol-% IIIa, Umsetzungsgrad der Isocyanatgruppen = 30 mol-%)

In einem Rundkolben mit Rückflusskühler wurden zu 36,296 Gewichtsteilen trimerisiertes Hexamethylendiisocyanat (Handelsprodukt Basonat HI 100 der BASF SE, Ludwigshafen), 36,093 Gewichtsteile Butylacetat und 2,458 Gewichtsteile Triethylorthoformiat vorgelegt. 1,786 Gewichtsteile N-(3-Trimethoxysilylpropan-1-yl)-N-n-butylamin (Handelsprodukt DYNASYLAN 1189 der Fa. Evonik) und 23,367 Gewichtsteile N,N-Bis(3-Trimethoxysilylpropan-1-yl)-amin (Handelsprodukt DYNASYLAN 1124 der Fa. Evonik) wurden vorgemischt und langsam bei Raumtemperatur unter Rückfluss und Stickstoffüberschleierung so dosiert zugegeben, dass die Produkttemperatur 60°C nicht überschreitet. Anschließend wurde das Reaktionsgemisch auf 60°C temperiert und gehalten, bis der Rest-NCO-Gehalt 4,9% erreicht hatte (NCO-Bestimmung durch Titration).

Die Messung des elektrischen Widerstandes des so hergestellten silanisierten Isocyanates B1 wurde mit Hilfe einer Eintauchmesszelle mit einem Leitfähigkeitsmessgerät der Fa. Byk Gardner vom Typ LC 2 (gemäß DIN 55667) durchgeführt und ergab 1080 kOhm. Das Ergebnis liegt somit deutlich über dem Wert von 200 kOhm, die gefordert sind.

### Formulierung der Bindemittelmischungen

Die Bindemittelmischungen der Beispiele 1 bis 4 sowie die Bindemittelmischungen der Vergleichsbeispiele 1 bis 4 wurden aus den in Tabelle 1 angegebenen Komponenten durch Vermischen hergestellt.

**Tabelle 1: Zusammensetzung der Bindemittelmischungen in Gewichtsteilen**

| | Vergleichs.-bsp.1 | Vergleichs.-bsp.2 | Vergleichs.-bsp.3 | Vergleichs.-bsp. 4 | Bsp.1 | Bsp.2 | Bsp.3 | Bsp.4 |
|---|---|---|---|---|---|---|---|---|
| Polyester A1 | 36,6 | 36,6 | 36,6 | 36,6 | 36,6 | 36,6 | 36,6 | 36,6 |
| Additiv F1 | 21,0 | 21,0 | 21,0 | 21,0 | 21,0 | 21,0 | 21,0 | 21,0 |
| Butylacetat | 14,7 | 14,7 | 14,7 | 14,7 | 14,7 | 14,7 | 14,7 | 14,7 |
| Butylglykoldiacetat | 2,1 | 2,1 | 2,1 | 2,1 | 2,1 | 2,1 | 2,1 | 2,1 |
| Triethylorthoformiat | 2,1 | 2,1 | 2,1 | 2,1 | 2,1 | 2,1 | 2,1 | 2,1 |
| Dynoadd¹⁾ | 0,20 | 0,20 | 0,20 | 0,20 | 0,20 | 0,20 | 0,20 | 0,20 |
| Tin.384 ²⁾ | 1,60 | 1,60 | 1,60 | 1,60 | 1,60 | 1,60 | 1,60 | 1,60 |
| Tin.152 ³⁾ | 2,75 | 2,75 | 2,75 | 2,75 | 2,75 | 2,75 | 2,75 | 2,75 |
| Kat. DV1 | 1,5 | 2 | 2,5 | 3 | | | | |
| Kat. D1 | | | | | 1,5 | 2 | 2,5 | 3 |
| DBN ⁴⁾ | 0,20 | 0,20 | 0,20 | 0,20 | 0,20 | 0,20 | 0,20 | 0,20 |
| ITDA ⁵⁾ | 2 | 2 | 2 | 2 | 2 | 2 | 2 | 2 |
| Summe | 84.75 | 85.25 | 85.75 | 86.25 | 84.75 | 85.25 | 85.75 | 86.25 |

| | | | | | | | | |
|---|---|---|---|---|---|---|---|---|
| Erläuterungen zu Tabelle 1: ¹⁾ Dynoadd F1, handelsübliches Verlaufsadditiv der Firma DYNEA ASA ²⁾ Tinuvin® 384, handelsübliches Lichtschutzmittel auf Basis eines Benztriazols der Firma Ciba ³⁾ Tinuvin® 152, handelsübliches Lichtschutzmittel auf Basis eines sterisch gehinderten Amins der Firma Ciba ⁴⁾ 30%ige Lösung von DBN Diazabicyclononen) in Butanol ⁵⁾ Isotridecylalkohol | | | | | | | | |

Die jeweiligen Bindemittelmischungen wurden durch die Zugabe von Butylacetat auf 33 Sekunden Auslaufzeit im DIN - 4 - Becher eingestellt und mit Hilfe einer Eintauchmesszelle mit einem Leitfähigkeitsmessgerät der Fa. Byk Gardner vom Typ LC 2 (gemäß DIN 55667) bezüglich des elektrischen Widerstandes bei 25 °C untersucht. Die in Tabelle 2 dargestellten Werte sind jeweils Mittelwerte aus 3 Messungen.

**Tabelle 2**

| | Vergleichs.-bsp.1 | Vergleichs.-bsp.2 | Vergleichs.-bsp.3 | Vergleichs.-bsp.4 | Bsp. 1 | Bsp. 2 | Bsp. 3 | Bsp. 4 |
|---|---|---|---|---|---|---|---|---|
| Elektr. Wid.-stand [kΩ] | 150 | 100 | 90 | 80 | 540 | 410 | 320 | 280 |

Die Ergebnisse zeigen deutlich, dass der elektrische Widerstand einerseits stark von der zugesetzten Menge an Katalysator abhängt. Obwohl in Vergleichsbeispiel 1 mit DBU ein Blockierungsmittel mit einem vergleichsweise hohen Molekulargewicht eingesetzt wurde, kann die in der Aufgabe angegebene Grenze, der Zielwert von > 200 kOhm, nicht erreicht werden.

Dies gelingt lediglich mit den erfindungsgemäßen, beschriebenen Blockierungsmitteln. Um eine ausreichende Witterungsstabilität der Klarlacke und einen möglichst hohen Umsatz der Silanvernetzungsreaktion zu erreichen und auch gute technologisch - mechanische Eigenschaften, ist es vorteilhaft, möglichst viel Katalysator einzusetzen.

### Formulierung der Beschichtungsmittel und Herstellung der Beschichtungen

Zur Untersuchung der mechanisch - technologischen Eigenschaften wurden die unter Verwendung der Bindemittelmischungen der Beispiele 2 bis 4 sowie die hinsichtlich die unter Verwendung der Bindemittelmischungen der Vergleichsbeispiele V1 bis V4 hergestellten Beschichtungsmittel der Beispiele 2 bis 4 bzw. V1 bis V4 hinsichtlich Ihrer Kratzfestigkeit untersucht. Zur Herstellung der Beschichtungsmittel wurden jeweils 100 Gewichtsteile der Bindemittelmischungen mit den in dargestellten Gewichtsteilen des teilsilanisierten Isocyanat B 1 gemischt und homogenisiert.

**Tabelle 3: Zusammensetzung der Beschichtungsmittel der Vergleichsbeispiele V1 bis V4 und der Beschichtungsmittel der erfindungsgemäßen Beispiele 2 bis 4 in Gewichtsteilen**

| | Vgl. V1 | Vgl. V2 | Vgl. V3 | Vgl. V4 | Bsp. 2 | Bsp. 3 | Bsp. 4 |
|---|---|---|---|---|---|---|---|
| Bindemittelmischung V1 | 100 | | | | | | |
| Bindemittelmischung V2 | | 100 | | | | | |
| Bindemittelmischung V3 | | | 100 | | | | |
| Bindemittelmischung V4 | | | | 100 | | | |
| Bindemittelmischung B2 | | | | | 100 | | |
| Bindemittelmischung B3 | | | | | | 100 | |
| Bindemittelmischung B4 | | | | | | | 100 |
| Isocyanat-Härter B1 | 123,7 | 123,0 | 122,3 | 121,6 | 122,3 | 121,6 | 120,9 |

Zur Beurteilung der Kratzfestigkeit der Beschichtungen wurden die Beschichtungsmittel kurz nach der Homogenisierung in drei Spritzgängen bei 2,5 bar pneumatisch auf einem handelsüblichen Wasserbasislack schwarz uni der Firma BASF Coatings AG appliziert. Danach wird die jeweils resultierende Beschichtung 5 Minuten bei Raumtemperatur abgelüftet und anschließend bei 135°C 20 Minuten eingebrannt. Danach wurden die resultierenden Beschichtungen hinsichtlich der Mikroeindringhärte nach DIN EN ISO 14577-1 sowie Ihrer Kratzfestigkeit mit Hilfe des Crockmeter-Tests [in Anlehnung an EN ISO 105-X12 mit 10 Doppelhüben und 9N Auflagekraft unter Verwendung von 9um Schleifpapier (3M 281Q wetordryTMproductionTM), unter anschließender Bestimmung des Restglanzes bei 20° mit einem handelsüblichen Glanzgerät nach Reinigung der Tafeln mit Isohexan.0] und AMTEC - Tests [in Anlehnung an EN ISO 20566:2006 nach Reinigung der Tafeln mit Isohexan.0] beurteilt. Die resultierenden Ergebnisse sind in Tabelle 4 zusammengestellt.

**Tabelle 4**

| Beispiel | Mikrohärte [N/mm2] | Restglanz Crockmeter nach Reinigung [%] | Restglanz AMTEC nach Reinigung [%] |
|---|---|---|---|
| Vgl. V1 | 102,6 | 72,5 | 89,5 |
| Vgl. V2 | 107,4 | 79,6 | 89,5 |
| Vgl. V3 | 109,7 | 78,8 | 91,8 |
| Vgl. V4 | 106,8 | 76,9 | 89,5 |
| Beispiel 2 | 115,4 | 88,5 | 89,8 |
| Beispiel 3 | 119,1 | 86,2 | 91,2 |
| Beispiel 4 | 119,2 | 88,4 | 89,9 |

Die Ergebnisse zeigen, dass die erfindungsgemäßen Formulierungen mit den erfindungsgemäßen Bindemittelmischungen, die bei elektrischen Widerstandswerten von mehr als 200 kOhm liegen, gute mechanische Eigenschaften aufweisen. Insbesondere die Crockmeterergebnisse liegen auf einem besseren Niveau als die der Vergleichsversuche.

Analog zu den Bindemittelmischungen der Beispiele 2 bis 4 werden aus den in Tabelle 5 angegebenen Komponenten die Bindemittelmischungen der Vergleichsbeispiele V5 bis V8 hergestellt.

**Tabelle 5: Zusammensetzung der Bindemittelmischungen der Vergleichsbeispiele V5 bis V8 in Gewichtsteilen**

| | Vgl. V5 | Vgl. V6 | Vgl. V7 | Vgl. V8 |
|---|---|---|---|---|
| Polyester A1 | 36,6 | 36,6 | 36,6 | 36,6 |
| Additiv F1 | 21,0 | 21,0 | 21,0 | 21,0 |
| Butylacetat | 14,7 | 14,7 | 14,7 | 14,7 |
| Butylglykoldiacetat | 2,1 | 2,1 | 2,1 | 2,1 |
| Triethylorthoformiat | 2,1 | 2,1 | 2,1 | 2,1 |
| Dynoadd ¹⁾ | 0,20 | 0,20 | 0,20 | 0,20 |
| Tin.384 ²⁾ | 1,60 | 1,60 | 1,60 | 1,60 |
| Tin.152 ³⁾ | 2,75 | 2,75 | 2,75 | 2,75 |
| Kat. DV2 | 1,5 | 3,0 | | |
| Kat. DV3 | | | 1,5 | 3,0 |
| DBN ⁴⁾ | 0,20 | 0,20 | 0,20 | 0,20 |
| ITDA ⁵⁾ | 2 | 2 | 2 | 2 |
| Summe | 84,75 | 86,25 | 84,75 | 86,25 |

| | | | | |
|---|---|---|---|---|
| Erläuterungen zu Tabelle 5: ¹⁾ Dynoadd F1, handelsübliches Verlaufsadditiv der Firma DYNEA ASA ²⁾ Tinuvin® 384, handelsübliches Lichtschutzmittel auf Basis eines Benztriazols der Firma Ciba ³⁾ Tinuvin® 152, handelsübliches Lichtschutzmittel auf Basis eines sterisch gehinderten Amins der Firma Ciba ⁴⁾ 30%ige Lösung von DBN Diazabicyclononen) in Butanol ⁵⁾ Isotridecylalkohol | | | | |

Die Untersuchung des elektrischen Widerstandes der Formulierungen ergab folgendes in Tabelle 6 dargestelltes Ergebnis:

**Tabelle 6. Leitfähigkeiten der Bindemittelmischungen der Vergleichsbeispiele V5 bis V8**

| | Vergleichsbeispiel 5 | Vergleichsbeispiel 6 | Vergleichsbeispiel 7 | Vergleichsbeispiel 8 |
|---|---|---|---|---|
| Elektr. Widerstand [kOhm] | 140 | 90 | 170 | 130 |

Die Ergebnisse zeigen, dass die Amine mit dem eher niedrigen Molekulargewicht nicht geeignet sind, die in der Aufgabe geforderten Werte für den elektrischen Widerstand zu erreichen.

Als Kenngröße für den Einsatz erfindungsgemäß geeigneter Blockierungsmittel kann die Abschätzung des hydrodynamischen Volumens herangezogen werden: V_{hydr} ∼ (r_{Kontour} / 2) ³ Eine entsprechende Abschätzung der Konturlängen und der daraus resultierenden hydrodynamischen Volumina ist in der folgenden Tabelle 7 dargestellt und basiert auf der Annahme einer mittleren Bindungslänge von 155 pm sowie einem projizierten Bindungswinkel von 30°. Ergänzend wird auf das Lehrbuch von H.-G- Elias, »Makromoleküle«, Hüthig & Wepf Verlag, Basel, Band 1, »Grundlagen«, Seite 51, verwiesen.

**Tabelle 7:**

| Blockierungsmittel | Anzahl der zu projizierenden Bindungen | Konturlänge [pm] | Abgeschätztes hydrodynamisches Volumen [pm3] |
|---|---|---|---|
| Tris-(Ethylhexyl)amin | 7 | 9,3 | 100,5 |
| Dimethylethanolamin | 4 | 5,3 | 18,6 |
| Morpholin | 2(1) | 5,5 | 20,8 |
| DBU | 4(1) | 6,9 | 18,6 |

Analog zu den Bindemittelmischungen der Beispiele 2 bis 4 werden aus den in Tabelle 8 angegebenen Komponenten die Bindemittelmischungen der erfindungsgemäßen Beispiele 5 bis 10 hergestellt.

**Tabelle 8: Zusammensetzung der Bindemittelmischungen in Gew.-Teilen**

| | Bsp. 5 | Bsp. 6 | Bsp. 7 | Bsp. 8 | Bsp. 9 | Bsp. 10 |
|---|---|---|---|---|---|---|
| Polyester A1 | 36,6 | 36,6 | 36,6 | 36,6 | 36,6 | 36,6 |
| Additiv F1 | 21,0 | 21,0 | 21,0 | 21,0 | 21,0 | 21,0 |
| Butylacetat | 14,7 | 14,7 | 14,7 | 14,7 | 14,7 | 14,7 |
| Butylglykoldiacetat | 2,1 | 2,1 | 2,1 | 2,1 | 2,1 | 2,1 |
| Triethylorthoformiat | 2,1 | 2,1 | 2,1 | 2,1 | 2,1 | 2,1 |
| Dynoadd ¹⁾ | 0,20 | 0,20 | 0,20 | 0,20 | 0,20 | 0,20 |
| Tin.384 ²⁾ | 1,60 | 1,60 | 1,60 | 1,60 | 1,60 | 1,60 |
| Tin.152 ³⁾ | 2,75 | 2,75 | 2,75 | 2,75 | 2,75 | 2,75 |
| Kat. D2 | 1,5 | 2 | -- | -- | -- | -- |
| Kat. D3 | -- | -- | 1,5 | 2 | 2,5 | 3 |
| DBN ⁴⁾ | 0,20 | 0,20 | 0,20 | 0,20 | 0,20 | 0,20 |
| ITDA ⁵⁾ | 2 | 2 | 2 | 2 | 2 | 2 |
| Summe | 84,75 | 85,25 | 84.75 | 85.25 | 85.75 | 86.25 |

| | | | | | | |
|---|---|---|---|---|---|---|
| Erläuterungen zu Tabelle 8: ¹⁾ Dynoadd F1, handelsübliches Verlaufsadditiv der Firma DYNEA ASA ²⁾ Tinuvin® 384, handelsübliches Lichtschutzmittel auf Basis eines Benztriazols der Firma Ciba ³⁾ Tinuvin® 152, handelsübliches Lichtschutzmittel auf Basis eines sterisch gehinderten Amins der Firma Ciba ⁴⁾ 30%ige Lösung von DBN Diazabicyclononen) in Butanol ⁵⁾ Isotridecylalkohol | | | | | | |

Die jeweiligen Bindemittelmischungen der Beispiele 5 und 6 wurden durch die Zugabe von Butylacetat auf 33 Sekunden Auslaufzeit im DIN - 4 - Becher eingestellt und - wie bei Beispiel 1 beschrieben - mit Hilfe einer Eintauchmesszelle mit einem Leitfähigkeitsmessgerät der Fa. Byk Gardner vom Typ LC 2 (gemäß DIN 55667) bezüglich des elektrischen Widerstandes untersucht. Es ergaben sich die in Tabelle 9 dargestellten Werte:

**Tabelle 9**

| | Bsp. 5 | Bsp. 6 | Bsp. 7 | Bsp. 8 | Bsp. 9 | Bsp. 10 |
|---|---|---|---|---|---|---|
| Elektrischer Widerstand [kΩ] | 260 | 220 | 570 | 420 | 380 | 300 |

Die Bindemittelmischungen der Beispiele 7 bis 10 neigen allerdings zur Kristallisation des Katalysators, so dass bevorzugt noch ein Kristallisationsinhibitor zugesetzt wird. Es ist ebenfalls möglich, den Katalysator mit einer Mischung aus Dodecyldimethylamin und Isododecyldimethylamin zu blockieren.

## Patentansprüche

1. Bindemittelmischung auf Basis aprotischer Lösemittel, enthaltend
mindestens eine hydroxylgruppenhaltige Verbindung (A) und
mindestens 1,0 Gew.-%, bezogen auf die nicht flüchtigen Bestandteile der Mischung, mindestens eines phosphor- und stickstoff-haltigen Katalysators (D) für die Vernetzung von Silangruppen,
**dadurch gekennzeichnet, dass** die Mischung
(i) als hydroxylgruppenhaltige Verbindung (A) mindestens einen hydroxyfunktionellen Polyester (A), bei dem im Mittel mindestens eine Hydroxylfunktion des Polyesters mit mindestens einer Säure ausgewählt aus der Gruppe der isomeren C8- bis C9-Monocarbonsäuren verestert ist, und
(ii) als Katalysator (D) mindestens einen phosphorhaltigen Katalysator enthält, der mit mindestens einem Amin der Formel (I) 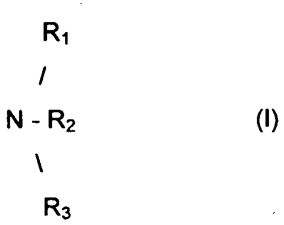 blockiert ist, wobei
R₁ ein acyclischer aliphatischer oder araliphatischer Kohlenwasserstoffrest mit mindestens 3 C-Atomen,
R₂ ein gleicher oder von R₁ und/oder R₃ verschiedener acyclischer aliphatischer oder araliphatischer Kohlenwasserstoffrest und
R₃ Wasserstoff oder ein gleicher oder von R₁ und/oder R₂ verschiedener acyclischer aliphatischer oder araliphatischer Kohlenwasserstoffrest ist.

2. Bindemittelmischung nach Anspruch 1, **dadurch gekennzeichnet, dass** mindestens einer der Reste R₁, R₂ und R₃ ein aliphatischer Kohlenwasserstoffrest mit 6 bis 18 C-Atomen, bevorzugt bevorzugt mit 8 bis 14 C-Atomen, ist und/oder dass mindestens einer der Reste R₁, R₂ und R₃, bevorzugt mindestens 2 der Reste R₁, R₂ und R₃ und besonders bevorzugt alle 3 Reste R₁, R₂ und R₃ verzweigte aliphatische Kohlenwasserstoffreste sind und/oder dass mindestens einer der Reste R₁, R₂ und R₃ ein verzweigter aliphatischer Kohlenwasserstoffrest mit 6 bis 18 C-Atomen, bevorzugt bevorzugt mit 8 bis 14 C-Atomen, ist.

3. Bindemittelmischung nach Anspruch 1 oder 2, **dadurch gekennzeichnet, dass** der aminblockierte phosphorhaltige Katalysator (D) oder die aminblockierten phosphorhaltigen Katalysatoren (D) mindestens ein tertiäres Amin der Formel (I) mit einer Konturlänge von mehr als 8 pm als Blockierungsmittel enthalten.

4. Bindemittelmischung nach einem der Ansprüche 1 bis 3, **dadurch gekennzeichnet, dass** der aminblockierte phosphorhaltige Katalysator (D) oder die aminblockierten phosphorhaltigen Katalysatoren (D) ausgewählt ist bzw. sind aus der Gruppe der aminblockierten substituierten Phosphonsäurediester und/oder Diphosphonsäurediester, der aminblockierten substituierten Phosphorsäuremonoester und/oder Phosphorsäurediester, vorzugsweise aus der Gruppe, bestehend aus aminblockierten acyclischen Phosphorsäurediestern und/oder aminblockierten cyclischen Phosphorsäurediestern und besonders bevorzugt aus der Gruppe der aminblockierten Phosphorsäurealkylester und/oder der aminblockierten Phosphorsäurephenylester, insbesondere der aminblockierten Phosphorsäurephenylester und ganz besonders bevorzugt mit Tris(ethylhexyl)amin blockierter Phosphorsäurephenylester ist.

5. Bindemittelmischung nach einem der Ansprüche 1 bis 4, **dadurch gekennzeichnet, dass** sie einen Kristallisationsinhibitor enthält, falls bei dem Amin (I) entweder
(i) R₃ Wasserstoff und R₁ sowie R₂ lineare aliphatische Kohlenwasserstoffreste sind oder
(ii) alle Reste R₁, R₂ und R₃ lineare aliphatische Kohlenwasserstoffreste sind.

6. Bindemittelmischung nach einem der Ansprüche 1 bis 5, **dadurch gekennzeichnet, dass** sie mindestens ein Lichtschutzmittel auf Basis sterisch gehinderter Amine (HALS) und mindestens einen UV-Absorber enthält.

7. Bindemittelmischung nach einem der Ansprüche 1 bis 6, **dadurch gekennzeichnet, dass** der hydroxyfunktionelle Polyester (A) ein hyperverzweigter, dendritischer hydroxyfunktioneller Polyester ist, bei dem im Mittel mindestens eine Hydroxylfunktion des Polyesters mit mindestens einer Säure ausgewählt aus der Gruppe der isomeren C8- bis C9-Monocarbonsäuren, bevorzugt mit einer gesättigten Monocarbonsäure, insbesondere mit Octansäure oder Isononansäure, ganz besonders bevorzugt mit Isononansäure, verestert ist.

8. Bindemittelmischung nach einem der Ansprüche 1 bis 7, **dadurch gekennzeichnet, dass** der hydroxyfunktionelle Polyester (A) eine OH-Zahl ≥ 150 mg KOH/g, bevorzugt eine Hydroxylzahl von > 180 mg KOH/g, besonders bevorzugt 185 - 240 mg KOH/g, jeweils bestimmt gemäß DIN 53240, und/oder eine Hydroxyfunktionalität (gegeben über die Anzahl der freien und der veresterten Hydroxylgruppen des Polyesters) von größer als 16 aufweist.

9. Bindemittelmischung nach einem der Ansprüche 1 bis 8, **dadurch gekennzeichnet, dass** der Polyester eine Säurezahl ≤ 8,0, bevorzugt 0 - 6,0 bestimmt gemäß DIN 53402 aufweist und/oder dass der Polyester ein zahlenmittleres Molekulargewicht von 1500 - 4000 g/mol, bevorzugt 2000 - 3500 g/mol bestimmt über GPC mit einem Polystyrolstandard in THF mit 0,1 Gew.-% Essigsäure, und/oder dass der Polyester eine Polydispersität Mw/Mn < 4, bevorzugt Mw/Mn < 2,5 und besonders bevorzugt Mw/Mn ≤ 2,0 aufweist.

10. Bindemittelmischung nach einem der Ansprüche 1 bis 9, **dadurch gekennzeichnet, dass** sie einen elektrischen Widerstand gemäß DIN 55667 von mindestens 200 kOhm bei 25 °C aufweist und/oder dass sie 2,0 Gew.-% bis 7,0 Gew.-%, bevorzugt 2,0 Gew.% bis 5,0 Gew.-%, bezogen auf die nicht flüchtigen Bestandteile der Mischung, mindestens eines phosphor- und stickstoff-haltigen Katalysators (D) enthält.

11. Beschichtungsmittel enthaltend eine Bindemittelmischung und mindestens eine gesättigte Verbindung (B) mit Isocyanatgruppen, die zumindest teilweise hydrolysierbare Silangruppen enthält, **dadurch gekennzeichnet, dass** es eine Bindemittelmischung nach einem der Ansprüche 1 bis 10 enthält.

12. Beschichtungsmittel nach Anspruch 11, **dadurch gekennzeichnet, dass** es als Lösemittel Butylacetat oder ein Butylacetat enthaltendes Lösemittelgemisch, insbesondere ein Lösemittelgemisch mit mindestens 60 Gew.-% Butylacetat, bezogen auf das Gesamtgewicht des Lösemittelgemisches, enthält
und/oder dass die Verbindung (B)
zwischen 2,5 und 97,5 mol-%, bezogen auf die Gesamtheit der Struktureinheiten (III) und (IV), mindestens einer Struktureinheit der Formel (III)
-N(X-SiR"x(OR')3-x)n(X'-SiR"y(OR')3-y)m (III)
wobei
R' = Wasserstoff, Alkyl oder Cycloalkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl, bevorzugt R' = Ethyl und/oder Methyl
X, X' = linearer und/oder verzweigter Alkylen oder Cycloalkylenrest mit 1 bis 20 Kohlenstoffatomen, bevorzugt X, X' = Alkylenrest mit 1 bis 4 Kohlenstoffatomen,
R" = Alkyl, Cycloalkyl, Aryl, oder Aralkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl, bevorzugt R" = Alkylrest, insbesondere mit 1 bis 6 C-Atomen,
n = 0 bis 2, m = 0 bis 2, m+n = 2 , sowie x, y = 0 bis 2,
und
zwischen 2,5 und 97,5 mol-%, bezogen auf die Gesamtheit der Struktureinheiten (III) und (IV), mindestens einer Struktureinheit der Formel (IV)
-Z-(X-SiR"x(OR')3-x) (IV),
wobei
Z = -NH-, -NR-,-O-, mit
R = Alkyl, Cycloalkyl, Aryl oder Aralkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl ,
x = 0 bis 2, und
X, R', R" die bei Formel (III) angegebene Bedeutung haben,
aufweist.

13. Mehrstufiges Beschichtungsverfahren, **dadurch gekennzeichnet, dass** auf ein gegebenenfalls vorbeschichtetes Substrat eine pigmentierte Basislackschicht und danach eine Schicht aus dem Beschichtungsmittel nach Anspruch 11 oder 12 aufgetragen wird.

14. Verwendung der Beschichtungsmittel nach Anspruch 11 oder 12 als Klarlack bzw. Anwendung des Verfahrens nach Anspruch 13 für die Automobilserienlackierung und die Automobilreparaturlackierung.

15. Effekt- und/oder farbgebende Mehrschichtlackierung aus mindestens einer pigmentierten Basislackschicht und mindestens einer darauf angeordneten Klarlackschicht, **dadurch gekennzeichnet, dass** die Klarlackschicht aus einem Beschichtungsmittel nach Anspruch 11 oder 12 hergestellt worden ist.

## Claims

1. Binder mixture based on aprotic solvents, comprising
at least one hydroxyl-containing compound (A) and
at least 1.0% by weight, based on the nonvolatile constituents of the mixture, of at least one phosphorus- and nitrogen-containing catalyst (D) for the crosslinking of silane groups,
**characterized in that** the mixture comprises
(i) as hydroxyl-containing compound (A) at least one hydroxyl-functional polyester (A) in which on average at least one hydroxyl function of the polyester is esterified with at least one acid selected from the group of the isomeric C8 to C9 monocarboxylic acids, and
(ii) as catalyst (D) at least one phosphorus-containing catalyst blocked with at least one amine of the formula (I) 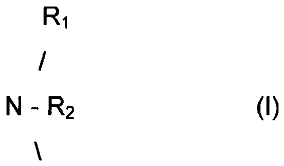 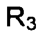 where
R₁ is an acyclic aliphatic or araliphatic hydrocarbon radical having at least 3 C atoms,
R₂ is an acyclic aliphatic or araliphatic hydrocarbon radical which is the same or different from R₁ and/or R₃, and
R₃ is hydrogen or an acyclic aliphatic or araliphatic hydrocarbon radical which is the same or different from R₁ and/or R₂.

2. Binder mixture according to Claim 1, **characterized in that** at least one of the radicals R₁, R₂, and R₃ is an aliphatic hydrocarbon radical having 6 to 18 C atoms, preferably having 8 to 14 C atoms, and/or **characterized in that** at least one of the radicals R₁, R₂, and R₃, preferably at least 2 of the radicals R₁, R₂, and R₃, and more preferably all 3 radicals R₁, R₂, and R₃ are branched aliphatic hydrocarbon radicals and/or where at least one of the radicals R₁, R₂, and R₃ is a branched aliphatic hydrocarbon radical having 6 to 18 C atoms, preferably having 8 to 14 C atoms.

3. Binder mixture according to Claim 1 or 2, **characterized in that** the amine-blocked, phosphorus-containing catalyst (D) comprises or the amine-blocked, phosphorus-containing catalysts (D) comprise at least one tertiary amine of the formula (I) having a contour length of more than 8 pm as blocking agent.

4. Binder mixture according to any of Claims 1 to 3, **characterized in that** the amine-blocked, phosphorus-containing catalyst (D) is or the amine-blocked, phosphorus-containing catalysts (D) are selected from the group of the amine-blocked substituted phosphonic diesters and/or diphosphonic diesters, of the amine-blocked substituted phosphoric monoesters and/or phosphoric diesters, preferably from the group consisting of amine-blocked acyclic phosphoric diesters and/or amine-blocked cyclic phosphoric diesters, and more preferably from the group of the amine-blocked phosphoric acid alkyl esters and/or of the amine-blocked phosphoric acid phenyl esters, more particularly of the amine-blocked phosphoric acid phenyl esters, and very preferably is phenyl phosphate blocked with tris(ethylhexyl)amine.

5. Binder mixture according to any of Claims 1 to 4, **characterized in that** it comprises a crystallization inhibitor if in the amine (I) either
(i) R₃ is hydrogen and R₁ and R₂ are linear aliphatic hydrocarbon radicals or
(ii) all radicals R₁, R₂ and R₃ are linear aliphatic hydrocarbon radicals.

6. Binder mixture according to any of Claims 1 to 5, **characterized in that** it comprises at least one light stabilizer based on sterically hindered amines (HALS) and at least one UV absorber.

7. Binder mixture according to any of Claims 1 to 6, **characterized in that** the hydroxyl-functional polyester (A) is a hyperbranched, dendritic hydroxyl-functional polyester in which on average at least one hydroxyl function of the polyester is esterified with at least one acid selected from the group of the isomeric C8 to C9 monocarboxylic acids, preferably with a saturated monocarboxylic acid, more particularly with octanoic acid or isononanoic acid, very preferably with isononanoic acid.

8. Binder mixture according to any of Claims 1 to 7, **characterized in that** the hydroxyl-functional polyester (A) has an OH number ≥ 150 mg KOH/g, preferably a hydroxyl number of > 180 mg KOH/g, more preferably 185 - 240 mg KOH/g, determined in each case in accordance with DIN 53240, and/or a hydroxyl functionality (provided by the number of free and esterified hydroxyl groups in the polyester) of greater than 16.

9. Binder mixture according to any of Claims 1 to 8, **characterized in that** the polyester has an acid number ≤ 8.0, preferably 0 - 6.0 as determined in accordance with DIN 53402 and/or **characterized in that** the polyester has a number-average molecular weight of 1500 - 4000 g/mol, preferably 2000 - 3500 g/mol, as determined via GPC with a polystyrene standard in THF with 0.1 % by weight acetic acid, and/or **characterized in that** the polyester has a polydispersity Mw/Mn < 4, preferably Mw/Mn < 2.5, and more preferably Mw/Mn ≤ 2.0.

10. Binder mixture according to any of Claims 1 to 9, **characterized in that** it has an electrical resistance to DIN 55667 of at least 200 kohm at 25°C and/or which contains 2.0% to 7.0% by weight, preferably 2.0% to 5.0% by weight, based on the nonvolatile constituents of the mixture, of at least one phosphorus- and nitrogen-containing catalyst (D).

11. Coating composition comprising a binder mixture and at least one saturated compound (B) with isocyanate groups, which comprises at least partly hydrolyzable silane groups, **characterized in that** said composition comprises a binder mixture according to any of Claims 1 to 10.

12. Coating composition according to Claim 11, **characterized in that** it comprises as solvent butyl acetate or a solvent mixture comprising butyl acetate, more particularly a solvent mixture with at least 60% by weight of butyl acetate, based on the total weight of the solvent mixture,
and/or **in that** the compound (B) comprises
between 2.5 and 97.5 mol%, based on the entirety of structural units (III) and (IV), of at least one structural unit of the formula (III)
-N(X-SiR"x(OR')3-x)n(X'-SiR"y(OR')3-y)m (III)
where
R' = hydrogen, alkyl or cycloalkyl, it being possible for the carbon chain to be interrupted by nonadjacent oxygen, sulfur or NRa groups, with Ra = alkyl, cycloalkyl, aryl or aralkyl, preferably R' = ethyl and/or methyl
X, X' = linear and/or branched alkylene or cycloalkylene radicals having 1 to 20 carbon atoms, preferably X, X' = alkylene radical having 1 to 4 carbon atoms,
R" = alkyl, cycloalkyl, aryl, or aralkyl, it being possible for the carbon chain to be interrupted by nonadjacent oxygen, sulfur or NRa groups, with Ra = alkyl, cycloalkyl, aryl or aralkyl, preferably R" = alkyl radical, in particular having 1 to 6 C atoms,
n = 0 to 2, m = 0 to 2, m+n = 2 , and x, y = 0 to 2,
and
between 2.5 and 97.5 mol%, based on the entirety of structural units (III) and (IV), of at least one structural unit of the formula (IV)
-Z-(X-SiR"x(OR')3-x) (IV),
where
Z = -NH-, -NR-, -O-, with
R = alkyl, cycloalkyl, aryl or aralkyl, it being possible for the carbon chain to be interrupted by nonadjacent oxygen, sulfur or NRa groups, with Ra = alkyl, cycloalkyl, aryl or aralkyl,
x = 0 to 2, and
X, R', R" have the definition stated in the case of formula (III).

13. Multistage coating method, **characterized in that** a pigmented basecoat film is applied to an optionally precoated substrate and thereafter a film of the coating composition according to Claim 11 or 12 is applied.

14. Use of the coating compositions according to Claim 11 or 12 as a clearcoat material or application of the method according to Claim 13 for automotive OEM finishing and automotive refinish.

15. Multicoat effect and/or color paint system comprising at least one pigmented basecoat and at least one clearcoat disposed thereon, **characterized in that** the clearcoat has been produced from a coating composition according to Claim 11 or 12.

## Revendications

1. Mélange de liant à base de solvants aprotiques, contenant
au moins un composé (A) contenant des groupes hydroxyle et
au moins 1,0% en poids, par rapport aux constituants non volatils du mélange, d'au moins un catalyseur (D) contenant du phosphore et de l'azote pour la réticulation des groupes silanes, **caractérisé en ce que** le mélange contient
(i) comme composé (A) contenant des groupes hydroxyle, au moins un polyester (A) à fonctionnalité hydroxy, dans lequel en moyenne au moins une fonction hydroxyle du polyester est estérifiée par au moins un acide choisi dans le groupe des acides C8-C9-monocarboxyliques isomères, et
(ii) comme catalyseur (D) au moins un catalyseur contenant du phosphore qui est bloqué par au moins une amine de formule (I) 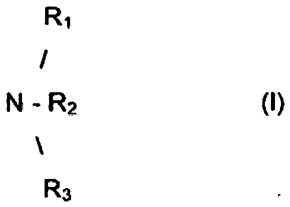 où
R₁ représente un radical hydrocarboné acyclique, aliphatique ou araliphatique comprenant au moins 3 atomes de carbone,
R₂ représente un radical hydrocarboné acyclique, aliphatique ou araliphatique identique à ou différent de R₁ et/ou R₃ et
R₃ représente hydrogène ou un radical hydrocarboné acyclique, aliphatique ou araliphatique identique à ou différent de R₁ et/ou R₂.

2. Mélange de liant selon la revendication 1, **caractérisé en ce qu'**au moins un des radicaux R₁, R₂ et R₃ représente un radical hydrocarboné aliphatique comprenant 6 à 18 atomes de carbone, de préférence 8 à 14 atomes de carbone et/ou **en ce qu'**au moins un des radicaux R₁, R₂ et R₃, de préférence au moins 2 des radicaux R₁, R₂ et R₃ et de manière particulièrement préférée les 3 radicaux R₁, R₂ et R₃ représentent des radicaux hydrocarbonés aliphatiques ramifiés et/ou **en ce qu'**au moins un des radicaux R₁, R₂ et R₃ représente un radical hydrocarboné aliphatique ramifié comprenant 6 à 18 atomes de carbone, de préférence 8 à 14 atomes de carbone.

3. Mélange de liant selon la revendication 1 ou 2, **caractérisé en ce que** le catalyseur (D) contenant du phosphore bloqué par amine ou les catalyseurs (D) contenant du phosphore bloqués par amine contien(nen)t au moins une amine tertiaire de formule (I) présentant une longueur du contour de plus de 8 pm (longueur projetée) comme agent de blocage.

4. Mélange de liant selon l'une quelconque des revendications 1 à 3, **caractérisé en ce que** le catalyseur (D) contenant du phosphore bloqué par amine ou les catalyseurs (D) contenant du phosphore bloqués par amine est/sont choisi(s) dans le groupe formé par les diesters de l'acide phosphonique et/ou les diesters de l'acide diphosphonique substitués bloqués par amine, les monoesters et/ou les diesters de l'acide phosphorique substitués bloqués par amine, de préférence dans le groupe formé par les diesters de l'acide phosphorique acycliques bloqués par amine et/ou les diesters de l'acide phosphorique cycliques bloqués par amine et de manière particulièrement préférée dans le groupe formé par les esters alkyliques de l'acide phosphorique bloqués par amine et/ou les esters phényliques de l'acide phosphorique bloqués par amine, en particulier les esters phényliques de l'acide phosphorique bloqués par amine et de manière tout particulièrement préférée l'ester phénylique de l'acide phosphorique bloqué par la tris(éthylhexyl)amine.

5. Mélange de liant selon l'une quelconque des revendications 1 à 4, **caractérisé en ce qu'**il contient un inhibiteur de cristallisation, si, pour l'amine (I), soit
(i) R₃ représente hydrogène et R₁ et R₂ représentent des radicaux hydrocarbonés aliphatiques linéaires, soit
(ii) tous les radicaux R₁, R₂ et R₃ sont des radicaux hydrocarbonés aliphatiques linéaires.

6. Mélange de liant selon l'une quelconque des revendications 1 à 5, **caractérisé en ce qu'**il contient au moins un agent de protection contre la lumière à base d'amines stériquement encombrées (HALS) et au moins un absorbant des UV.

7. Mélange de liant selon l'une quelconque des revendications 1 à 6, **caractérisé en ce que** le polyester (A) à fonctionnalité hydroxy est un polyester à fonctionnalité hydroxy hyperramifié, dendritique, dans lequel en moyenne au moins une fonction hydroxyle du polyester est estérifiée par au moins un acide choisi dans le groupe des acides C8-C9-monocarboxyliques isomères, de préférence par un acide monocarboxylique saturé, en particulier par l'acide octanoïque ou l'acide isononanoïque, de manière tout particulièrement préférée par l'acide isononanoïque.

8. Mélange de liant selon l'une quelconque des revendications 1 à 7, **caractérisé en ce que** le polyester (A) à fonctionnalité hydroxy présente un indice d'OH ≥ 150 mg de KOH/g, de préférence un indice d'hydroxyle > 180 mg de KOH/g, de manière particulièrement préférée de 185-240 mg de KOH/g, à chaque fois déterminé selon la norme DIN 53240, et/ou une fonctionnalité hydroxy (indiquée sur le nombre de groupes hydroxyle libres et estérifiés du polyester) supérieure à 16.

9. Mélange de liant selon l'une quelconque des revendications 1 à 8, **caractérisé en ce que** le polyester présente un indice d'acide ≤ 8,0, de préférence de 0-6,0, déterminé selon la norme DIN 53402 et/ou **en ce que** le polyester présente un poids moléculaire numérique moyen de 1500-4000 g/mole, de préférence de 2000-3500 g/mole, déterminé par CPG avec un témoin de polystyrène dans le THF avec 0,1% en poids d'acide acétique, et/ou **en ce que** le polyester présente une polydispersité Mw/Mn < 4, de préférence Mw/Mn < 2,5 et de manière particulièrement préférée Mw/Mn ≤ 2,0.

10. Mélange de liant selon l'une quelconque des revendications 1 à 9, **caractérisé en ce qu'**il présente une résistance électrique selon la norme DIN 55667 d'au moins 200 kOhm à 25°C et/ou **en ce qu'**il contient 2,0% en poids à 7,0% en poids, de préférence 2,0% en poids à 5,0% en poids, par rapport aux constituants non volatils du mélange, d'au moins catalyseur (D) contenant du phosphore et de l'azote.

11. Agent de revêtement contenant un mélange de liant et au moins un composé saturé (B) présentant des groupes isocyanate, qui contient des groupes silanes au moins partiellement hydrolysables, **caractérisé en ce qu'**il contient un mélange de liant selon l'une quelconque des revendications 1 à 10.

12. Agent de revêtement selon la revendication 11, **caractérisé en ce qu'**il contient, comme solvant, de l'acétate de butyle ou un mélange de solvants contenant de l'acétate de butyle, en particulier un mélange de solvants contenant au moins 60% en poids d'acétate de butyle par rapport au poids total du mélange de solvants et/ou **en ce que** le composé (B) présente entre 2,5 et 97,5% en mole, par rapport à la totalité des unités de structure (III) et (IV), d'au moins une unité de structure de formule (III)
-N(X-SiR"ₓ(OR')₃₋ₓ₎ₙ(X'-SiR"_{y}(OR')_{3-y})ₘ (III)
où
R' = hydrogène, alkyle ou cycloalkyle, la chaîne carbonée pouvant être interrompue par des groupes oxygène, soufre ou NRa non adjacents, avec Ra = alkyle, cycloalkyle, aryle ou aralkyle, de préférence R' = éthyle et/ou méthyle,
X, X' = un radical alkylène linéaire et/ou ramifié ou cycloalkylène, comprenant 1 à 20 atomes de carbone, de préférence X, X' = un radical alkylène comprenant 1 à 4 atomes de carbone,
R" = alkyle, cycloalkyle, aryle ou aralkyle, où la chaîne carbonée peut être interrompue par des groupes oxygène, soufre ou NRa non adjacents, avec Ra = alkyle, cycloalkyle, aryle ou aralkyle, de préférence R" = un radical alkyle, comprenant en particulier 1 à 6 atomes de carbone,
n = 0 à 2, m = 0 à 2, m + n = 2 et x, y = 0 à 2,
et
entre 2,5 et 97,5% en mole, par rapport à la totalité des unités de structure (III) et (IV), d'au moins une unité de structure de formule (IV)
-Z- (X-SiR"ₓ(OR')₃₋ₓ) (IV),
où
Z = -NH-, -NR-,-O-, avec
R = alkyle, cycloalkyle, aryle ou aralkyle, la chaîne carbonée pouvant être interrompue par des groupes oxygène, soufre ou NRa non adjacents, avec Ra = alkyle, cycloalkyle, aryle ou aralkyle,
x = 0 à 2 et
X, R', R" ont la signification indiquée pour la formule (III) .

13. Procédé de revêtement à plusieurs étapes, **caractérisé en ce qu'**on applique, sur un substrat le cas échéant revêtu au préalable, une couche de laque de base pigmentée, puis une couche de l'agent de revêtement selon la revendication 11 ou 12.

14. Utilisation de l'agent de revêtement selon la revendication 11 ou 12 comme laque claire ou utilisation du procédé selon la revendication 13 pour le laquage en série et le laquage de réparation de voitures.

15. Laquage multicouche conférant un effet et/ou une couleur constitué par au moins une couche de laque de base pigmentée et au moins une couche de laque claire disposée sur celle-ci, **caractérisé en ce que** la couche de laque claire a été préparée à partir d'un agent de revêtement selon la revendication 11 ou 12.
